# EUROPEAN PATENT APPLICATION

(11) **EP 3 072 687 A1**
(43) Date of publication of application: **28.09.2016**
(21) Application number: 15160666.2
(22) Date of filing: 24.03.2015
(51) Int. Cl.: B32B 27/32, C08J 3/20, C08J 3/22, C09D 123/00, C09C 3/08, C09C 1/02

(54) **Easy to disperse calcium carbonate to improve hot tack strength**

(71) Applicant: Omya International AG, 4665 Oftringen (CH)
(72) Inventor: Knerr, Michael, 4665 Oftringen (CH); Ohr, Steffen, 6210 Sursee (CH); Muratore, Antonio, 54100 Massa (IT); Fornera, Tazio, 4800 Zofingen (CH)
(74) Representative: Boos, Melanie

(57) **Abstract**

The present invention relates to a process for producing an extrusion-coated material, an extrusion-coated material produced by the process, an article comprising the extrusion-coated material as well as the use of the extrusion-coated material in a lamination process.

## Description

The present invention relates to a process for producing an extrusion-coated material, an extrusion-coated material produced by the process, an article comprising the extrusion-coated material as well as the use of the extrusion-coated material in a lamination process.

In practice, extrusion coating is typically used for the sealing of packages such as pouches, cardboard packaging, bags etc., wherein the sealing is often obtained with high cycle frequency. In this regard, a laminate structure, which is filled with a polymeric coating composition acting as an adhesive layer, is hot sealed with a certain seal bar temperature. Just after sealing the packaging is processed further usually implying high mechanical stress. It is therefore important that the sealing is already stable enough at higher temperatures such that it can be further processed even though it is not completely cooled down. This so called hot tack strength is a limiting factor in increasing the cycle frequency. It is therefore desirable to have a polymeric coating providing high hot tack.

Extrusion coating methods are well known in the art and are described in a number of documents. For example, WO 2011/081753 A1 relates to methods for extrusion coating of a substrate. The methods comprise applying an extrusion coating composition to a surface of a substrate by extrusion coating. In these methods, the extrusion coating composition includes a polyolefin and an inorganic particulate material having an average particle size of no greater than 2 µm and a particle loading of at least 20 wt.-%, based on the total weight of polyolefin and the inorganic particulate material. WO 2014/153073 A1 relates to a method of making a container from a sheet of a composite packaging structure, the sheet including a fiber-containing layer and a mineral-containing layer, the method comprising: cutting the sheet into a desired shape; folding the sheet to form a three-dimensional shape; and heat sealing abutting surfaces of the container to secure the abutting surfaces to one another; wherein the heat sealing is performed under the following conditions: a dwell time in the range from about 0.30 seconds to about 15 seconds; a temperature range from about 115 °C to about 240 °C; and a seal pressure at or below about 0.80 MPa.

The polymeric coating compositions used in such extrusion coating methods are typically made from a thermoplastic material and a mineral filler material. Extrusion coating methods are well known in the art and are described in a number of documents. For example, EP 2 390 280 A1 relates to a process for preparing treated mineral filler products, and to its preferred use in the field of plastic applications, and in particular polypropylene (PP)- or polyethylene (PE)-based breathable or extrusion coating film applications. Furthermore, reference is made to the applicant's unpublished European patent application no. 14 195 970.0.

However, the described polymeric coating compositions have the disadvantage that they have low hot tack strength when used in extrusion coating methods and thus increasing the cycle frequency of processing is limited.

In view of the foregoing, improving the production of an extrusion-coated material still remains of interest to the skilled man. It would be especially desirable to provide an alternative or improved process for producing an extrusion-coated material which can be prepared in a more efficient, economic and ecologic way, especially enabling an increase in the hot tack strength, preferably an increasing in the hot tack strength over a broad seal bar temperature range and thus to provide more security in the packaging process. Furthermore, it would be desirable to increase the cycle frequency during processing, while saving energy by lowering the seal bar temperature.

It is thus an object of the present invention to provide a process for producing an extrusion-coated material. Another object may also be seen in the provision of a process for producing an extrusion-coated material that increases the hot tack strength, preferably over a broad seal bar temperature range. A further object may be seen in the provision of a process for producing an extrusion-coated material that provides more security in the packaging process. A further object may be seen in the provision of a process for producing an extrusion-coated material enabling an increase cycle frequency during processing. Another object may be seen in the provision of a process for producing an extrusion-coated material that saves energy by lowering the seal bar temperature.

One or more of the foregoing and other problems are solved by the subject-matter as defined herein in the independent claims. Advantageous embodiments of the present invention are defined in the corresponding sub-claims.

A first aspect of the present invention relates to a process for producing an extrusion-coated material. The process comprises the following steps:
a) providing at least one filler material in powder form,
b) providing at least one polymer binder,
c) providing at least one thermoplastic polymer,
d) simultaneously or subsequently feeding the at least one filler material of step a) and the at least one polymer binder of step b) into a high speed mixer unit,
e) mixing the at least one filler material of step a) and the at least one polymer binder of step b) in the high speed mixer unit to obtain a compacted material,
f) reducing the temperature of the compacted material obtained in step d) below the melting point or glass transition temperature of the at least one polymer binder,
g) combining the compacted material obtained in step f) and the at least one thermoplastic polymer of step c) to obtain a filled thermoplastic polymer,
h) extrusion coating the filled thermoplastic polymer obtained in step g) on at least a portion of the surface of a substrate.

According to a further aspect of the present invention, an extrusion-coated material produced by the process, as defined herein, is provided. According to another aspect of the present invention, an article comprising the extrusion-coated material, as defined herein, is provided, wherein the article is selected from the group consisting of composite cans, cups, bricks and pouches, ream wrappings, multi-wall bags, liners for cartons, corrugated shipping containers, fibre drums, vacuum-forming materials for blister packaging, book or booklet covers, meat wraps, cheese wraps, packaging of confectionery and cigarettes, display materials, stickers, seals, graphic applications, protection of drugs, protection of cosmetics and envelopes. According to a still further aspect of the present invention, the use of the extrusion-coated material, as defined herein, in a lamination process is provided

According to one embodiment of the present process, the at least one filler material of step a) comprises a calcium carbonate-comprising filler material.

According to another embodiment of the present process, the at least one filler material of step a) is a calcium carbonate-comprising filler material being selected from the group consisting of natural ground calcium carbonate, precipitated calcium carbonate, surface-modified calcium carbonate, and mixtures thereof, and preferably natural ground calcium carbonate.

According to yet another embodiment of the present process, the at least one filler material of step a) has a weight median particle size *d*₅₀ from 0.05 to 10 µm, preferably from 0.1 to 7 µm, more preferably from 0.25 to 5 µm, and most preferably from 0.5 to 4 µm.

According to one embodiment of the present process, the at least one filler material of step a) is at least one surface treated filler material comprising a treatment layer on at least a part of the surface of the filler material, wherein the treatment layer comprises i) at least one mono-substituted succinic anhydride and/or at least one mono-substituted succinic acid and/or salty reaction products thereof, and/or ii) a phosphoric acid ester or blend of one or more phosphoric acid mono-ester and salty reaction products thereof and/or one or more phosphoric acid di-ester and salty reaction products thereof, and/or iii) at least one saturated aliphatic linear or branched carboxylic acid, and/or iv) at least one polydialkylsiloxane, and/or mixtures of the materials according to i) to iv).

According to another embodiment of the present process, the at least one mono-substituted succinic anhydride consists of succinic anhydride mono-substituted with a group selected from a linear, branched, aliphatic and cyclic group having a total amount of carbon atoms from C2 to C30, preferably from C3 to C25, and most preferably from C4 to C20 in the substituent, and/or the one or more phosphoric acid mono-ester consisting of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or the one or more phosphoric acid di-ester consisting of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent, and/or the saturated aliphatic linear or branched carboxylic acid is octanoic acid or stearic acid.

According to yet another embodiment of the present process, the at least one surface-treated filler material comprises the treatment layer in an amount of at least 0.1 wt.-%, preferably in an amount from 0.1 to 3 wt.-%, based on the total dry weight of the at least one filler material.

According to one embodiment of the present process, the at least one filler material is added in step d) in an amount from 50 to 99 wt.-%, preferably from 60 to 98 wt.-%, more preferably from 80 to 92 wt.-%, and most preferably from 87 to 90 wt.-%, based on the total weight of the compacted material.

According to another embodiment of the present process, the at least one polymer binder of step b) has a rotational viscosity from 100 to 400 000 mPa·s, preferably from 1 000 to 100 000 mPa·s, and more preferably from 5 000 to 50 000 mPa·s, at 190°C, by using a rotational viscosimeter.

According to yet another embodiment of the present process, the at least one polymer binder of step b) is selected from the group consisting of polyolefins, ethylene copolymers, e.g. ethylene-1-hexene copolymers or ethylene-1-octene copolymers, metallocene based polypropylenes, polypropylene homo- or co-polymers, preferably amorphous polypropylene homopolymers, and/or mixtures thereof.

According to one embodiment of the present process, the at least one thermoplastic polymer of step c) is selected from homopolymers and/or copolymers of polyolefins, polyamides, polystyrenes, polyacrylates, polyvinyls, polyurethanes, halogen-containing polymers, polyesters, polycarbonates and/or mixtures thereof.

According to another embodiment of the present process, the substrate of step h) is selected from a paper, a paperboard, foil, preferably an aluminium-foil or a metallized foil, a nonwoven fabric, a polymeric film, preferably a BOPP-film, a PET-film, PBT-film or a nylon-film, and combinations thereof.

According to yet another embodiment of the present process, the compacted material is added in step g) in an amount from 1 to 80 wt.-%, preferably from 3 to 40 wt.-% and, more preferably from 5 to 30 wt.-% and most preferably from 10 to 20 wt.-% based on the total weight of the filled thermoplastic polymer.

It should be understood that for the purposes of the present invention, the following terms have the following meanings:

For the purpose of the present invention, a "compacted material" is a bulk material consisting of a conglomerate of a number of single particles forming a material with a weight median particle size *d*₅₀ ranging from 10 µm to 10 mm, measured by sieve analysis using the Retsch AS 200 sieve tower according to ISO 3310 standard.

As used herein the term "polymer" generally includes homopolymers and co-polymers such as, for example, block, graft, random and alternating copolymers, as well as blends and modifications thereof. The polymer can be an amorphous polymer, a crystalline polymer, or a semi-crystalline polymer, i.e. a polymer comprising crystalline and amorphous fractions. The degree of crystallinity is specified in percent and can be determined by differential scanning calorimetry (DSC). An amorphous polymer may be characterized by its glass transition temperature and a crystalline polymer may be characterized by its melting point. A semi-crystalline polymer may be characterized by its glass transition temperature and/or its melting point.

The term "glass transition temperature" in the meaning of the present invention refers to the temperature at which the glass transition occurs, which is a reversible transition in amorphous materials (or in amorphous regions within semi-crystalline materials) from a hard and relatively brittle state into a molten or rubber-like state. The glass-transition temperature is always lower than the melting point of the crystalline state of the material, if one exists. The term "melting point" in the meaning of the present invention refers to the temperature at which a solid changes state from solid to liquid at atmospheric pressure. At the melting point the solid and liquid phase exist in equilibrium. Glass-transition temperature and melting point are determined by ISO 11357 with a heating rate of 10°C/min.

According to the present invention, the expression "high speed" concerning the high speed mixer unit means circumferential speeds in the range from 5 to 80 m/s, preferably 10 to 50 m/s.

A "thermoplastic polymer" in the meaning of the present invention refers to a material that softens when exposed to heat and which substantially returns to a non-softened condition when cooled down to room temperature.

For the purpose of the present invention, the term "calcium carbonate-comprising filler material" refers to a material that comprises at least 80 wt.-% calcium carbonate, based on the total dry weight of the calcium carbonate-comprising filler material.

"Natural ground calcium carbonate" (GCC) in the meaning of the present invention is a calcium carbonate obtained from natural sources, such as limestone, marble, dolomite or chalk, and processed through a wet and/or dry treatment such as grinding, screening and/or fractionation, for example by a cyclone or classifier.

"Surface-modified calcium carbonate" in the meaning of the present invention may feature a surface-reaction product of natural ground or precipitated calcium carbonate, i.e. "surface-reacted calcium carbonate". A "surface-reacted calcium carbonate" is a material comprising calcium carbonate and insoluble, preferably at least partially crystalline, calcium salts of anions of acids on the surface. Preferably, the insoluble calcium salt extends from the surface of at least a part of the calcium carbonate. The calcium ions forming said at least partially crystalline calcium salt of said anion originate largely from the starting calcium carbonate material. Surface-modified calcium carbonates are described, for example, in US 2012/0031576 A1, WO 2009/074492 A1, EP 2 264 109 A1, EP 2 070 991 A1, EP 2 264 108 A1, WO 00/39222 A1, WO 2004/083316 A1 or WO 2005/121257 A2.

The term "surface-treated filler material product" in the meaning of the present invention refers to a calcium carbonate-comprising filler material which has been contacted with a surface treatment agent such as to obtain a coating layer on at least a part of the surface of the calcium carbonate-comprising filler material.

The term "succinic anhydride", also called dihydro-2,5-furandione, succinic acid anhydride or succinyl oxide, has the molecular formula C₄H₄O₃ and is the acid anhydride of succinic acid.

The term "mono-substituted succinic anhydride" in the meaning of the present invention refers to a succinic anhydride wherein a hydrogen atom is substituted by another substituent.

The term "mono-substituted succinic acid" in the meaning of the present invention refers to a succinic acid wherein a hydrogen atom is substituted by another substituent.

The term "salty reaction products of at least one mono-substituted succinic anhydride and/or at least one mono-substituted succinic acid" in the meaning of the present invention refers to products obtained by contacting a calcium carbonate-comprising filler material with one or more mono-substituted succinic anhydride(s). Said salty reaction products are formed between the mono-substituted succinic acid which is formed from the applied mono-substituted succinic anhydride and reactive molecules located at the surface of the calcium carbonate-comprising filler material. Alternatively, said salty reaction products are formed between the mono-substituted succinic acid, which may optionally be present with the at least one mono-substituted succinic anhydride, and reactive molecules located at the surface of the calcium carbonate-comprising filler material.

The term "phosphoric acid mono-ester" in the meaning of the present invention refers to an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent.

The term "phosphoric acid di-ester" in the meaning of the present invention refers to an o-phosphoric acid molecule di-esterified with two alcohol molecules selected from the same or different, unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent.

The term "salty reaction products of a phosphoric acid ester or blend of one or more phosphoric acid mono-esters and/or one or more phosphoric acid di-esters" in the meaning of the present invention refers to products obtained by contacting a calcium carbonate-comprising filler material with one or more phosphoric acid mono-ester and one or more phosphoric acid di-ester and optionally phosphoric acid. Said salty reaction products are formed between the applied one or more phosphoric acid mono-ester and one or more phosphoric acid di-ester and optionally phosphoric acid and reactive molecules located at the surface of the calcium carbonate-comprising filler material.

Throughout the present document, the "particle size" of a calcium carbonate-comprising filler or other particulate materials is described by its distribution of particle sizes. The value *dₓ* represents the diameter relative to which *x* % by weight of the particles have diameters less than *dₓ.* This means that the *d*₂₀ value is the particle size at which 20 wt.-% of all particles are smaller, and the *d*₉₈ value is the particle size at which 98 wt.-% of all particles are smaller. The *d*₉₈ value is also designated as "top cut". The *d*₅₀ value is thus the weight median particle size, i.e. 50 wt.-% of all grains are bigger whilst the remaining 50 wt.-% are smaller than this particle size. For the purpose of the present invention the particle size is specified as weight median particle size *d*₅₀ unless indicated otherwise. For determining the weight median particle size *d*₅₀ value or the top cut particle size *d*₉₈ value a Sedigraph 5100 or 5120 device from the company Micromeritics, USA, can be used. The method and the instrument are known to the skilled person and are commonly used to determine grain size of fillers and pigments. The measurement is carried out in an aqueous solution of 0.1 wt.-% Na₄P₂O₇. The samples are dispersed using a high speed stirrer and supersonics.

For the purpose of the present invention, the "solids content" of a liquid composition is a measure of the amount of material remaining after all the solvent or water has been evaporated.

A "suspension" or "slurry" in the meaning of the present invention comprises insoluble solids and water, and optionally further additives, and usually contains large amounts of solids and, thus, is more viscous and can be of higher density than the liquid from which it is formed.

A "powder" or "powder form" in the meaning of the present invention comprises a filler material, e.g. a mineral material and/or a pigment. Preferably the filler material forms more than 95 wt.-% of the powder material. For the purpose of the present invention, a "mineral material" is a solid substance having a definite inorganic chemical composition and characteristic crystalline and/or amorphous structure.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" even though such a limited understanding is always included by the terms "obtained" or "defined" as a preferred embodiment.

As set out above, the inventive process for producing an extrusion-coated material comprises the steps a), b), c), d), e), f), g) and h). In the following, the details and preferred embodiments of the inventive process for producing an extrusion-coated material will be described in more detail. It is to be understood that these technical details and embodiments also apply to the inventive extrusion-coated material, the article comprising the extrusion-coated material as well as the use of the extrusion-coated material in a lamination process, as far as applicable.

### Characterization of step a): provision of at least one filler material

According to step a) of the process of the present invention, at least one filler material in powder form is provided.

The term "at least one" filler material in the meaning of the present invention means that the filler material comprises, preferably consists of, one or more filler material(s).

In one embodiment of the present invention, the at least one filler material comprises, preferably consists of, one filler material. Alternatively, the at least one filler material comprises, preferably consists of, two or more filler materials. For example, the at least one filler material comprises, preferably consists of, two filler materials.

Preferably, the at least one filler material comprises, more preferably consists of, one filler material.

It is appreciated that the at least one filler material is a mineral filler material.

For the purpose of the present invention, a "mineral filler material" is a solid substance having a definite inorganic chemical composition and characteristic crystalline and/or amorphous structure.

In one embodiment of the present invention, the at least one filler material comprises a calcium carbonate-comprising filler material.

The filler material is a calcium carbonate-comprising filler material preferably being selected from the group consisting of natural ground calcium carbonate (GCC), precipitated calcium carbonate (PCC), surface-modified calcium carbonate (MCC), and mixtures thereof. According to a preferred embodiment, the filler material is a calcium carbonate-comprising filler material being a natural ground calcium carbonate (GCC).

GCC is understood to be a naturally occurring form of calcium carbonate, mined from sedimentary rocks such as limestone or chalk, from metamorphic marble rocks, eggshells, or seashells, and processed through a treatment such as grinding, screening and/or fractionating in wet and/or dry form, for example by a cyclone or classifier. In one embodiment of the present invention, the GCC is selected from the group comprising marble, chalk, dolomite, limestone, and mixtures thereof.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation of calcium and carbonate ions, for example CaCl₂ and Na₂CO₃, out of solution. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried.

A "surface-modified calcium carbonate" may feature surface-reacted GCC or PCC. A surface-reacted calcium carbonate may be prepared by providing a GCC or PCC in form of an aqueous suspension, and adding an acid to said suspension. Suitable acids are, for example, sulphuric acid, hydrochloric acid, phosphoric acid, citric acid, oxalic acid, or a mixture thereof. In a next step, the calcium carbonate is treated with gaseous carbon dioxide. If a strong acid such as sulphuric acid or hydrochloric acid is used for the acid treatment step, the carbon dioxide will form automatically *in situ.* Alternatively or additionally, the carbon dioxide can be supplied from an external source. Surface-reacted calcium carbonates are described, for example, in US 2012/0031576 A1, WO 2009/074492 A1, EP 2 264 109 A1, EP 2 070 991 A1, EP 2 264 108 A1, WO 00/39222 A1, WO 2004/083316 A1 or WO 2005/121257 A2.

In one preferred embodiment, the filler material being a calcium carbonate-comprising filler material is marble.

According to one embodiment of the present invention, the amount of calcium carbonate in the calcium carbonate-comprising filler material is at least 80 wt.-%, e.g. at least 95 wt.-%, preferably between 97 and 100 wt.-%, more preferably between 98.5 and most preferably 99.95 wt.-%, based on the total dry weight of the calcium carbonate-comprising filler material.

The term "dry" calcium carbonate-comprising filler material is understood to be a filler material having less than 0.3 % by weight of water relative to the filler material weight. The % water (equal to "residual total moisture content") is determined according to the Coulometric Karl Fischer measurement method, wherein the filler material is heated to 220°C, and the water content released as vapour and isolated using a stream of nitrogen gas (at 100 ml/min) is determined in a Coulometric Karl Fischer unit.

The at least one filler material is in powder form, i.e. in the form of a particulate material, and may have a particle size distribution as conventionally employed for the material(s) involved in the type of product to be produced.

According to one embodiment of the present invention, the at least one filler material, preferably the calcium carbonate-comprising filler material, has a weight median particle size *d*₅₀ from 0.05 µm to 10 µm, preferably from 0.1 µm to 7 µm, more preferably from 0.25 µm to 5 µm, and most preferably from 0.5 µm to 4 µm. According to one embodiment of the present invention, the at least one filler material, preferably the calcium carbonate-comprising filler material, has a top cut (*d*₉₈) of ≤ 25 µm, preferably of ≤ 20 µm, more preferably of ≤ 17.5 µm, and most preferably of ≤ 15 µm.

According to another embodiment, the at least one filler material, preferably the calcium carbonate-comprising filler material, has a BET specific surface area of from 0.5 and 150 m²/g, preferably from 0.5 to 50 m²/g, more preferably from 0.5 to 35 m²/g, and most preferably from 0.5 to 15 m²/g, as measured using nitrogen and the BET method according to ISO 9277.

The term "specific surface area" (in m²/g) of the filler material or calcium carbonate-comprising filler material in the meaning of the present invention is determined using the BET method with nitrogen as adsorbing gas, which is well known to the skilled man (ISO 9277:1995). The total surface area (in m²) of the filler material or calcium carbonate-comprising filler material is then obtained by multiplying the specific surface area by the mass (in g) of the filler material or calcium carbonate-comprising filler material prior to treatment.

According to one embodiment of the present invention, the at least one filler material, preferably the calcium carbonate-comprising filler material, has a weight median particle size *d*₅₀ from 0.05 µm to 10 µm and/or a top cut (*d*₉₈) of ≤ 25 µm and/or a BET specific surface area of from 0.5 and 150 m²/g, as measured using nitrogen and the BET method according to ISO 9277.

In one embodiment of the present invention, the at least one filler material, preferably the calcium carbonate-comprising filler material, is preferably a marble having a median particle size diameter *d*₅₀ value from 0.05 µm to 10 µm, preferably from 0.1 µm to 7 µm, more preferably from 0.25 µm to 5 µm and most preferably from 0.5 µm to 4 µm. In this case, the at least one filler material, preferably the calcium carbonate-comprising filler material, has a BET specific surface area of from 0.5 to 150 m²/g, preferably of from 0.5 to 50 m²/g, more preferably of from 0.5 to 35 m²/g and most preferably of from 0.5 to 15 m²/g, measured using nitrogen and the BET method according to ISO 9277.

If the at least one filler material is a calcium carbonate-comprising filler material, the calcium carbonate-comprising filler material is preferably a dry ground material, a material being wet ground and dried or a mixture of the foregoing materials. In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill an attrition mill, a pin mill, a hammer mill, a pulveriser, a shredder, a de-clumper, a knife cutter, or other such equipment known to the skilled man.

In case the calcium carbonate-comprising filler material is a wet ground calcium carbonate-comprising filler material, the grinding step may be performed under conditions such that autogenous grinding takes place and/or by horizontal ball milling, and/or other such processes known to the skilled man. It is to be noted that the same grinding methods can be used for dry grinding the calcium carbonate-comprising filler material. The wet processed ground calcium carbonate-comprising filler material thus obtained may be washed and dewatered by well-known processes, e.g. by flocculation, filtration or forced evaporation prior to drying. The subsequent step of drying may be carried out in a single step such as spray drying, or in at least two steps, e.g. by applying a first heating step to the calcium carbonate-comprising filler material in order to reduce the associated moisture content to a level which is not greater than about 0.5 wt.-%, based on the total dry weight of the calcium carbonate-comprising filler material. The residual total moisture content of the filler can be measured by the Karl Fischer coulometric titration method, desorbing the moisture in an oven at 195°C and passing it continuously into the KF coulometer

(Mettler Toledo coulometric KF Titrator C30, combined with Mettler oven DO 0337) using dry N₂ at 100 ml/min for 10 min. The residual total moisture content can be determined with a calibration curve and also a blind of 10 min gas flow without a sample can be taken into account. The residual total moisture content may be further reduced by applying a second heating step to the calcium carbonate-comprising filler material. In case said drying is carried out by more than one drying steps, the first step may be carried out by heating in a hot current of air, while the second and further drying steps are preferably carried out by an indirect heating in which the atmosphere in the corresponding vessel comprises a surface treatment agent. It is also common that the calcium carbonate-comprising filler material is subjected to a beneficiation step (such as a flotation, bleaching or magnetic separation step) to remove impurities.

In one embodiment of the present invention, the calcium carbonate-comprising filler material comprises a dry ground calcium carbonate-comprising filler material. In another preferred embodiment, the calcium carbonate-comprising filler material is a material being wet ground in a horizontal ball mill, and subsequently dried by using the well-known process of spray drying.

According to the present invention the at least one filler material, preferably the calcium carbonate-comprising filler material, has a residual moisture content of ≤ 1 wt.-%, based on the total dry weight of the at least one filler material, preferably the calcium carbonate-comprising filler material. Depending on the at least one filler material, preferably the calcium carbonate-comprising filler material, the at least one filler material, preferably the calcium carbonate-comprising filler material, has a residual total moisture content of from 0.01 to 1 wt.-%, preferably from 0.01 to 0.2 wt.-%, more preferably from 0.02 to 0.15 wt.-% and most preferably from 0.04 to 0.15 wt.-%, based on the total dry weight of the at least one filler material, preferably the calcium carbonate-comprising filler material.

For example, in case a wet ground and spray dried marble is used as calcium carbonate-comprising filler material, the residual total moisture content of the calcium carbonate-comprising filler material is preferably from 0.01 to 0.1 wt.-%, more preferably from 0.02 to 0.08 wt.-%, and most preferably from 0.04 to 0.07 wt.-%, based on the total dry weight of the calcium carbonate-comprising filler material. If a PCC is used as calcium carbonate-comprising filler material, the residual total moisture content of the calcium carbonate-comprising filler material is preferably of from 0.01 to 0.2 wt.-%, more preferably from 0.05 to 0.17 wt.-%, and most preferably from 0.05 to 0.10 wt.-%, based on the total dry weight of the calcium carbonate-comprising filler material.

According to one embodiment of the present invention, the at least one filler material, preferably the calcium carbonate-comprising filler material, is at least one surface treated filler material comprising a treatment layer on at least a part of the surface of the filler material.

The term "surface-treated filler material" in the meaning of the present invention refers to a filler material, preferably a calcium carbonate-comprising filler material, which has been contacted with a surface treatment agent such as to obtain a coating layer on at least a part of the surface of the filler material, preferably the calcium carbonate-comprising filler material.

According to one embodiment, the at least one surface treated filler material comprises the treatment layer in an amount of at least 0.1 wt.-%, preferably in an amount from 0.1 to 3 wt.-%, based on the total dry weight of the at least one filler material.

According to one embodiment, the surface-treated filler material comprises the treatment layer in an amount from 0.1 to 2.5 wt.-%, preferably in an amount of from 0.1 to 2 wt.-%, more preferably in an amount of from 0.1 to 1.5 wt.-%, even more preferably in an amount of from 0.1 to 1 wt.-%, and most preferably in an amount of from 0.2 to 0.8 wt.-%, based on the total dry weight of the filler material.

According to one embodiment the treatment layer is on the whole surface of the filler material. The composition of the treatment layer and specific embodiments thereof will be described in more detail further below.

Preferably, the treatment layer comprises
i) at least one mono-substituted succinic anhydride and/or at least one mono-substituted succinic acid and/or salty reaction products thereof, and/or
ii) a phosphoric acid ester or blend of one or more phosphoric acid mono-ester and salty reaction products thereof and/or one or more phosphoric acid di-ester and salty reaction products thereof, and/or
iii) at least one saturated aliphatic linear or branched carboxylic acid, and/or
iv) at least one polydialkylsiloxane,
and/or mixtures of the materials according to i) to iv).

According to one embodiment of the present invention, the surface-treated filler material comprises a treatment layer on at least a part of the surface of the calcium carbonate-comprising filler material, wherein the treatment layer comprises at least one mono-substituted succinic anhydride and/or at least one mono-substituted succinic acid and/or salty reaction products thereof.

Additionally or alternatively, the filler material and a hydrophobizing material are added separately in process step d). In this case, the hydrophobizing material is preferably selected from the group comprising
i) at least one mono-substituted succinic anhydride and/or at least one mono-substituted succinic acid, and/or
ii) a phosphoric acid ester or blend of one or more phosphoric acid mono-ester and salty reaction products thereof and/or one or more phosphoric acid di-ester, and/or
iii) at least one saturated aliphatic linear or branched carboxylic acid, and/or
iv) at least one polydialkylsiloxane,
and/or mixtures of the materials according to i) to iv).

In other words, process step d) may further comprise feeding a hydrophobizing material separately or simultaneously to the at least one filler material and the at least one polymer binder into the high speed mixer.

Preferably, the at least one filler material, preferably the calcium carbonate-comprising filler material, is at least one surface treated filler material comprising a treatment layer on at least a part of the surface of the filler material.

The term "succinic anhydride", also called dihydro-2,5-furandione, succinic acid anhydride or succinyl oxide, has the molecular formula C₄H₄O₃ and is the acid anhydride of succinic acid.

The term "mono-substituted succinic anhydride" in the meaning of the present invention refers to a succinic anhydride wherein a hydrogen atom is substituted by another substituent.

The term "mono-substituted succinic acid" in the meaning of the present invention refers to a succinic acid wherein a hydrogen atom is substituted by another substituent.

The term "salty reaction products of at least one mono-substituted succinic anhydride and/or at least one mono-substituted succinic acid" in the meaning of the present invention refers to products obtained by contacting a filler material, preferably a calcium carbonate-comprising filler material, with one or more mono-substituted succinic anhydride(s). Said salty reaction products are formed between the mono-substituted succinic acid which is formed from the applied mono-substituted succinic anhydride and reactive molecules located at the surface of the filler material, preferably the calcium carbonate-comprising filler material. Alternatively, said salty reaction products are formed between the mono-substituted succinic acid, which may optionally be present with the at least one mono-substituted succinic anhydride, and reactive molecules located at the surface of the filler material, preferably the calcium carbonate-comprising filler material.

It is appreciated that the expression "at least one" mono-substituted succinic anhydride means that one or more kinds of mono-substituted succinic anhydride may be provided in the process of the present invention.

Accordingly, it should be noted that the at least one mono-substituted succinic anhydride may be one kind of mono-substituted succinic anhydride. Alternatively, the at least one mono-substituted succinic anhydride may be a mixture of two or more kinds of mono-substituted succinic anhydride. For example, the at least one mono-substituted succinic anhydride may be a mixture of two or three kinds of mono-substituted succinic anhydride, like two kinds of mono-substituted succinic anhydride.

In one embodiment of the present invention, the at least one mono-substituted succinic anhydride is one kind of mono-substituted succinic anhydride.

It is appreciated that the at least one mono-substituted succinic anhydride represents a surface treatment agent and consists of succinic anhydride mono-substituted with a group selected from any linear, branched, aliphatic and cyclic group having a total amount of carbon atoms from C2 to C30 in the substituent.

In one embodiment of the present invention, the at least one mono-substituted succinic anhydride consists of succinic anhydride mono-substituted with a group selected from a linear, branched, aliphatic and cyclic group having a total amount of carbon atoms from C3 to C25 in the substituent. For example, the at least one mono-substituted succinic anhydride consists of succinic anhydride mono-substituted with a group selected from a linear, branched, aliphatic and cyclic group having a total amount of carbon atoms from C4 to C20 in the substituent.

For the sake of completeness, it is to be noted throughout the present application that a branched or cyclic group having a total amount of carbon atoms from C2 to C30 in the substituent refers to a corresponding group in which the lowest amount of carbon atoms corresponds to the lowest amount of carbon atoms possible and thus differs from C2. Thus, a linear group having a total amount of carbon atoms from C2 to C30 in the substituent, refers to a total amount of carbon atoms starting from C2, whereas a branched group having a total amount of carbon atoms from C2 to C30 in the substituent, refers to a total amount of carbon atoms starting from C3, whereas a cyclic group having a total amount of carbon atoms from C2 to C30 in the substituent, refers to a total amount of carbon atoms starting from C3. The linear, branched, aliphatic and cyclic group has a total amount of carbon atoms up to C30, preferably up to C25 and most preferably up to C20 in the substituent.

More precisely, a linear group having a total amount of carbon atoms from C2 to C30, preferably from C3 to C25 and most preferably from C4 to C20, in the substituent, refers to a linear group in which the total amount of carbon atom is from C2 to C30, preferably from C3 to C25 and most preferably from C4 to C20, in the substituent. A branched group having a total amount of carbon atoms from C2 to C30, preferably from C3 to C25 and most preferably from C4 to C20, in the substituent, refers to a branched group in which the total amount of carbon atom is from C3 to C30, preferably from C3 to C25 and most preferably from C4 to C20, in the substituent. A cyclic group having a total amount of carbon atoms from C2 to C30, preferably from C3 to C25 and most preferably from C4 to C20, in the substituent refers to a cyclic group in which the total amount of carbon atom is from C3 to C30, preferably from C3 to C25 and most preferably from C4 to C20, in the substituent.

In one embodiment of the present invention, the at least one mono-substituted succinic anhydride consists of succinic anhydride mono-substituted with one group being a linear and aliphatic group having a total amount of carbon atoms from C2 to C30, preferably from C3 to C25 and most preferably from C4 to C20 in the substituent. Additionally or alternatively, the at least one mono-substituted succinic anhydride consists of succinic anhydride mono-substituted with one group being a branched and aliphatic group having a total amount of carbon atoms from C2 to C30 (i.e. C3 to C30), preferably from C3 to C25 (i.e. C3 to C25) and most preferably from C4 to C20 (i.e. C4 to C20) in the substituent.

Thus, it is preferred that the at least one mono-substituted succinic anhydride consists of succinic anhydride mono-substituted with one group being a linear or branched, alkyl group having a total amount of carbon atoms from C2 to C30 (or C3 to C30 for a branched alkyl group), preferably from C3 to C25 (or C3 to C25 for a branched alkyl group) and most preferably from C4 to C20 (or C4 to C20 for a branched alkyl group) in the substituent.

For example, the at least one mono-substituted succinic anhydride consists of succinic anhydride mono-substituted with one group being a linear alkyl group having a total amount of carbon atoms from C2 to C30, preferably from C3 to C25 and most preferably from C4 to C20 in the substituent. Additionally or alternatively, the at least one mono-substituted succinic anhydride consists of succinic anhydride mono-substituted with one group being a branched alkyl group having a total amount of carbon atoms from C3 to C30, preferably from C3 to C25 and most preferably from C4 to C20 in the substituent.

The term "alkyl" in the meaning of the present invention refers to a linear or branched, saturated organic compound composed of carbon and hydrogen. In other words, "alkyl mono-substituted succinic anhydrides" are composed of linear or branched, saturated hydrocarbon chains containing a pendant succinic anhydride group.

In one embodiment of the present invention, the at least one mono-substituted succinic anhydride is at least one linear or branched alkyl mono-substituted succinic anhydride. For example, the at least one alkyl mono-substituted succinic anhydride is selected from the group comprising ethylsuccinic anhydride, propylsuccinic anhydride, butylsuccinic anhydride, triisobutyl succinic anhydride, pentylsuccinic anhydride, hexylsuccinic anhydride, heptylsuccinic anhydride, octylsuccinic anhydride, nonylsuccinic anhydride, decyl succinic anhydride, dodecyl succinic anhydride, hexadecanyl succinic anhydride, octadecanyl succinic anhydride, and mixtures thereof.

Accordingly, it is appreciated that e.g. the term "butylsuccinic anhydride" comprises linear and branched butylsuccinic anhydride(s). One specific example of linear butylsuccinic anhydride(s) is n-butylsuccinic anhydride. Specific examples of branched butylsuccinic anhydride(s) are iso-butylsuccinic anhydride, sec-butylsuccinic anhydride and/or tert-butylsuccinic anhydride.

Furthermore, it is appreciated that e.g. the term "hexadecanyl succinic anhydride" comprises linear and branched hexadecanyl succinic anhydride(s). One specific example of linear hexadecanyl succinic anhydride(s) is n-hexadecanyl succinic anhydride. Specific examples of branched hexadecanyl succinic anhydride(s) are 14-methylpentadecanyl succinic anhydride, 13-methylpentadecanyl succinic anhydride, 12-methylpentadecanyl succinic anhydride, 11-methylpentadecanyl succinic anhydride, 10-methylpentadecanyl succinic anhydride, 9-methylpentadecanyl succinic anhydride, 8-methylpentadecanyl succinic anhydride, 7-methylpentadecanyl succinic anhydride, 6-methylpentadecanyl succinic anhydride, 5-methylpentadecanyl succinic anhydride, 4-methylpentadecanyl succinic anhydride, 3-methylpentadecanyl succinic anhydride, 2-methylpentadecanyl succinic anhydride, 1-methylpentadecanyl succinic anhydride, 13-ethylbutadecanyl succinic anhydride, 12-ethylbutadecanyl succinic anhydride, 11-ethylbutadecanyl succinic anhydride, 10-ethylbutadecanyl succinic anhydride, 9-ethylbutadecanyl succinic anhydride, 8-ethylbutadecanyl succinic anhydride, 7-ethylbutadecanyl succinic anhydride, 6-ethylbutadecanyl succinic anhydride, 5-ethylbutadecanyl succinic anhydride, 4-ethylbutadecanyl succinic anhydride, 3-ethylbutadecanyl succinic anhydride, 2-ethylbutadecanyl succinic anhydride, 1-ethylbutadecanyl succinic anhydride, 2-butyldodecanyl succinic anhydride, 1-hexyldecanyl succinic anhydride, 1-hexyl-2-decanyl succinic anhydride, 2-hexyldecanyl succinic anhydride, 6,12-dimethylbutadecanyl succinic anhydride, 2,2-diethyldodecanyl succinic anhydride, 4,8,12-trimethyltridecanyl succinic anhydride, 2,2,4,6,8-pentamethylundecanyl succinic anhydride, 2-ethyl-4-methyl-2-(2-methylpentyl)-heptyl succinic anhydride and/or 2-ethyl-4,6-dimethyl-2-propylnonyl succinic anhydride.

Furthermore, it is appreciated that e.g. the term "octadecanyl succinic anhydride" comprises linear and branched octadecanyl succinic anhydride(s). One specific example of linear octadecanyl succinic anhydride(s) is n-octadecanyl succinic anhydride. Specific examples of branched hexadecanyl succinic anhydride(s) are 16-methylheptadecanyl succinic anhydride, 15-methylheptadecanyl succinic anhydride, 14-methylheptadecanyl succinic anhydride, 13-methylheptadecanyl succinic anhydride, 12-methylheptadecanyl succinic anhydride, 11-methylheptadecanyl succinic anhydride, 10-methylheptadecanyl succinic anhydride, 9-methylheptadecanyl succinic anhydride, 8-methylheptadecanyl succinic anhydride, 7-methylheptadecanyl succinic anhydride, 6-methylheptadecanyl succinic anhydride, 5-methylheptadecanyl succinic anhydride, 4-methylheptadecanyl succinic anhydride, 3-methylheptadecanyl succinic anhydride, 2-methylheptadecanyl succinic anhydride, 1-methylheptadecanyl succinic anhydride, 14-ethylhexadecanyl succinic anhydride, 13-ethylhexadecanyl succinic anhydride, 12-ethylhexadecanyl succinic anhydride, 11-ethylhexadecanyl succinic anhydride, 10-ethylhexadecanyl succinic anhydride, 9-ethylhexadecanyl succinic anhydride, 8-ethylhexadecanyl succinic anhydride, 7-ethylhexadecanyl succinic anhydride, 6-ethylhexadecanyl succinic anhydride, 5-ethylhexadecanyl succinic anhydride, 4-ethylhexadecanyl succinic anhydride, 3-ethylhexadecanyl succinic anhydride, 2-ethylhexadecanyl succinic anhydride, 1-ethylhexadecanyl succinic anhydride, 2-hexyldodecanyl succinic anhydride, 2-heptylundecanyl succinic anhydride, iso-octadecanyl succinic anhydride and/or 1-octyl-2-decanyl succinic anhydride.

In one embodiment of the present invention, the at least one alkyl mono-substituted succinic anhydride is selected from the group comprising butylsuccinic anhydride, hexylsuccinic anhydride, heptylsuccinic anhydride, octylsuccinic anhydride, hexadecanyl succinic anhydride, octadecanyl succinic anhydride, and mixtures thereof.

In one embodiment of the present invention, the at least one mono-substituted succinic anhydride is one kind of alkyl mono-substituted succinic anhydride. For example, the one alkyl mono-substituted succinic anhydride is butylsuccinic anhydride. Alternatively, the one alkyl mono-substituted succinic anhydride is hexylsuccinic anhydride. Alternatively, the one alkyl mono-substituted succinic anhydride is heptylsuccinic anhydride or octylsuccinic anhydride. Alternatively, the one alkyl mono-substituted succinic anhydride is hexadecanyl succinic anhydride. For example, the one alkyl mono-substituted succinic anhydride is linear hexadecanyl succinic anhydride such as n-hexadecanyl succinic anhydride or branched hexadecanyl succinic anhydride such as 1-hexyl-2-decanyl succinic anhydride. Alternatively, the one alkyl mono-substituted succinic anhydride is octadecanyl succinic anhydride. For example, the one alkyl mono-substituted succinic anhydride is linear octadecanyl succinic anhydride such as n-octadecanyl succinic anhydride or branched octadecanyl succinic anhydride such as iso-octadecanyl succinic anhydride or 1-octyl-2-decanyl succinic anhydride.

In one embodiment of the present invention, the one alkyl mono-substituted succinic anhydride is butylsuccinic anhydride such as n-butylsuccinic anhydride.

In one embodiment of the present invention, the at least one mono-substituted succinic anhydride is a mixture of two or more kinds of alkyl mono-substituted succinic anhydrides. For example, the at least one mono-substituted succinic anhydride is a mixture of two or three kinds of alkyl mono-substituted succinic anhydrides.

In one embodiment of the present invention, the at least one mono-substituted succinic anhydride consists of succinic anhydride mono-substituted with one group being a linear or branched alkenyl group having a total amount of carbon atoms from C2 to C30 (or C3 to C30 for a branched alkenyl group), preferably from C3 to C25 (or C3 to C25 for a branched alkenyl group) and most preferably from C4 to C20 (or C4 to C20 for a branched alkenyl group) in the substituent.

The term "alkenyl" in the meaning of the present invention refers to a linear or branched, unsaturated organic compound composed of carbon and hydrogen. Said organic compound further contains at least one double bond in the substituent, preferably one double bond. In other words, "alkenyl mono-substituted succinic anhydrides" are composed of linear or branched, unsaturated hydrocarbon chains containing a pendant succinic anhydride group. It is appreciated that the term "alkenyl" in the meaning of the present invention includes the cis and trans isomers.

In one embodiment of the present invention, the at least one mono-substituted succinic anhydride is at least one linear or branched alkenyl mono-substituted succinic anhydride. For example, the at least one alkenyl mono-substituted succinic anhydride is selected from the group comprising ethenylsuccinic anhydride, propenylsuccinic anhydride, butenylsuccinic anhydride, triisobutenyl succinic anhydride, pentenylsuccinic anhydride, hexenylsuccinic anhydride, heptenylsuccinic anhydride, octenylsuccinic anhydride, nonenylsuccinic anhydride, decenyl succinic anhydride, dodecenyl succinic anhydride, hexadecenyl succinic anhydride, octadecenyl succinic anhydride, and mixtures thereof.

Accordingly, it is appreciated that e.g. the term "hexadecenyl succinic anhydride" comprises linear and branched hexadecenyl succinic anhydride(s). One specific example of linear hexadecenyl succinic anhydride(s) is n-hexadecenyl succinic anhydride such as 14-hexadecenyl succinic anhydride, 13-hexadecenyl succinic anhydride, 12-hexadecenyl succinic anhydride, 11-hexadecenyl succinic anhydride, 10-hexadecenyl succinic anhydride, 9-hexadecenyl succinic anhydride, 8-hexadecenyl succinic anhydride, 7-hexadecenyl succinic anhydride, 6-hexadecenyl succinic anhydride, 5-hexadecenyl succinic anhydride, 4-hexadecenyl succinic anhydride, 3-hexadecenyl succinic anhydride and/or 2-hexadecenyl succinic anhydride. Specific examples of branched hexadecenyl succinic anhydride(s) are 14-methyl-9-pentadecenyl succinic anhydride, 14-methyl-2-pentadecenyl succinic anhydride, 1-hexyl-2-decenyl succinic anhydride and/or iso-hexadecenyl succinic anhydride.

Furthermore, it is appreciated that e.g. the term "octadecenyl succinic anhydride" comprises linear and branched octadecenyl succinic anhydride(s). One specific example of linear octadecenyl succinic anhydride(s) is n-octadecenyl succinic anhydride such as 16-octadecenyl succinic anhydride, 15-octadecenyl succinic anhydride, 14-octadecenyl succinic anhydride, 13-octadecenyl succinic anhydride, 12-octadecenyl succinic anhydride, 11-octadecenyl succinic anhydride, 10-octadecenyl succinic anhydride, 9-octadecenyl succinic anhydride, 8-octadecenyl succinic anhydride, 7-octadecenyl succinic anhydride, 6-octadecenyl succinic anhydride, 5-octadecenyl succinic anhydride, 4-octadecenyl succinic anhydride, 3-octadecenyl succinic anhydride and/or 2-octadecenyl succinic anhydride. Specific examples of branched octadecenyl succinic anhydride(s) are 16-methyl-9-heptadecenyl succinic anhydride, 16-methyl-7-heptadecenyl succinic anhydride, 1-octyl-2-decenyl succinic anhydride and/or iso-octadecenyl succinic anhydride.

In one embodiment of the present invention, the at least one alkenyl mono-substituted succinic anhydride is selected from the group comprising hexenylsuccinic anhydride, octenylsuccinic anhydride, hexadecenyl succinic anhydride, octadecenyl succinic anhydride, and mixtures thereof.

In one embodiment of the present invention, the at least one mono-substituted succinic anhydride is one alkenyl mono-substituted succinic anhydride. For example, the one alkenyl mono-substituted succinic anhydride is hexenylsuccinic anhydride. Alternatively, the one alkenyl mono-substituted succinic anhydride is octenylsuccinic anhydride. Alternatively, the one alkenyl mono-substituted succinic anhydride is hexadecenyl succinic anhydride. For example, the one alkenyl mono-substituted succinic anhydride is linear hexadecenyl succinic anhydride such as n-hexadecenyl succinic anhydride or branched hexadecenyl succinic anhydride such as 1-hexyl-2-decenyl succinic anhydride. Alternatively, the one alkenyl mono-substituted succinic anhydride is octadecenyl succinic anhydride. For example, the one alkyl mono-substituted succinic anhydride is linear octadecenyl succinic anhydride such as n-octadecenyl succinic anhydride or branched octadecenyl succinic anhydride such iso-octadecenyl succinic anhydride, or 1-octyl-2-decenyl succinic anhydride.

In one embodiment of the present invention, the one alkenyl mono-substituted succinic anhydride is linear octadecenyl succinic anhydride such as n-octadecenyl succinic anhydride. In another embodiment of the present invention, the one alkenyl mono-substituted succinic anhydride is linear octenylsuccinic anhydride such as n-octenylsuccinic anhydride.

If the at least one mono-substituted succinic anhydride is one alkenyl mono-substituted succinic anhydride, it is appreciated that the one alkenyl mono-substituted succinic anhydride is present in an amount of ≥ 95 wt.-% and preferably of ≥ 96.5 wt.-%, based on the total weight of the at least one mono-substituted succinic anhydride.

In one embodiment of the present invention, the at least one mono-substituted succinic anhydride is a mixture of two or more kinds of alkenyl mono-substituted succinic anhydrides. For example, the at least one mono-substituted succinic anhydride is a mixture of two or three kinds of alkenyl mono-substituted succinic anhydrides.

If the at least one mono-substituted succinic anhydride is a mixture of two or more kinds of alkenyl mono-substituted succinic anhydrides, one alkenyl mono-substituted succinic anhydride is linear or branched octadecenyl succinic anhydride, while each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. For example, the at least one mono-substituted succinic anhydride is a mixture of two or more kinds of alkenyl mono-substituted succinic anhydrides, wherein one alkenyl mono-substituted succinic anhydride is linear octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof. Alternatively, the at least one mono-substituted succinic anhydride is a mixture of two or more kinds of alkenyl mono-substituted succinic anhydrides, wherein one alkenyl mono-substituted succinic anhydride is branched octadecenyl succinic anhydride and each further alkenyl mono-substituted succinic anhydride is selected from ethenylsuccinic anhydride, propenylsuccinic anhydride, butenylsuccinic anhydride, pentenylsuccinic anhydride, hexenylsuccinic anhydride, heptenylsuccinic anhydride, nonenylsuccinic anhydride, hexadecenyl succinic anhydride and mixtures thereof.

For example, the at least one mono-substituted succinic anhydride is a mixture of two or more kinds of alkenyl mono-substituted succinic anhydrides comprising one or more hexadecenyl succinic anhydride, like linear or branched hexadecenyl succinic anhydride(s), and one or more octadecenyl succinic anhydride, like linear or branched octadecenyl succinic anhydride(s).

In one embodiment of the present invention, the at least one mono-substituted succinic anhydride is a mixture of two or more kinds of alkenyl mono-substituted succinic anhydrides comprising linear hexadecenyl succinic anhydride(s) and linear octadecenyl succinic anhydride(s). Alternatively, the at least one mono-substituted succinic anhydride is a mixture of two or more kinds of alkenyl mono-substituted succinic anhydrides comprising branched hexadecenyl succinic anhydride(s) and branched octadecenyl succinic anhydride(s). For example, the one or more hexadecenyl succinic anhydride is linear hexadecenyl succinic anhydride like n-hexadecenyl succinic anhydride and/or branched hexadecenyl succinic anhydride like 1-hexyl-2-decenyl succinic anhydride. Additionally or alternatively, the one or more octadecenyl succinic anhydride is linear octadecenyl succinic anhydride like n-octadecenyl succinic anhydride and/or branched octadecenyl succinic anhydride like iso-octadecenyl succinic anhydride and/or 1-octyl-2-decenyl succinic anhydride.

If the at least one mono-substituted succinic anhydride is a mixture of two or more kinds of alkenyl mono-substituted succinic anhydrides, it is appreciated that one alkenyl mono-substituted succinic anhydride is present in an amount of from 20 to 60 wt.-% and preferably of from 30 to 50 wt.-%, based on the total weight of the at least one mono-substituted succinic anhydride provided.

For example, if the at least one mono-substituted succinic anhydride is a mixture of two or more kinds of alkenyl mono-substituted succinic anhydrides comprising one or more hexadecenyl succinic anhydride(s), like linear or branched hexadecenyl succinic anhydride(s), and one or more octadecenyl succinic anhydride(s), like linear or branched hexadecenyl succinic anhydride(s), it is preferred that the one or more octadecenyl succinic anhydride(s) is present in an amount of from 20 to 60 wt.-% and preferably of from 30 to 50 wt.-%, based on the total weight of the at least one mono-substituted succinic anhydride.

It is also appreciated that the at least one mono-substituted succinic anhydride may be a mixture of at least one alkyl mono-substituted succinic anhydrides and at least one alkenyl mono-substituted succinic anhydrides.

If the at least one mono-substituted succinic anhydride is a mixture of at least one alkyl mono-substituted succinic anhydrides and at least one alkenyl mono-substituted succinic anhydrides, it is appreciated that the alkyl substituent of the at least one alkyl mono-substituted succinic anhydrides and the alkenyl substituent of the at least one alkenyl mono-substituted succinic anhydrides are preferably the same. For example, the at least one mono-substituted succinic anhydride is a mixture of ethylsuccinic anhydride and ethenylsuccinic anhydride. Alternatively, the at least one mono-substituted succinic anhydride is a mixture of propylsuccinic anhydride and propenylsuccinic anhydride. Alternatively, the at least one mono-substituted succinic anhydride is a mixture of butylsuccinic anhydride and butenylsuccinic anhydride. Alternatively, the at least one mono-substituted succinic anhydride is a mixture of triisobutyl succinic anhydride and triisobutenyl succinic anhydride. Alternatively, the at least one mono-substituted succinic anhydride is a mixture of pentylsuccinic anhydride and pentenylsuccinic anhydride. Alternatively, the at least one mono-substituted succinic anhydride is a mixture of hexylsuccinic anhydride and hexenylsuccinic anhydride. Alternatively, the at least one mono-substituted succinic anhydride is a mixture of heptylsuccinic anhydride and heptenylsuccinic anhydride. Alternatively, the at least one mono-substituted succinic anhydride is a mixture of octylsuccinic anhydride and octenylsuccinic anhydride. Alternatively, the at least one mono-substituted succinic anhydride is a mixture of nonylsuccinic anhydride and nonenylsuccinic anhydride. Alternatively, the at least one mono-substituted succinic anhydride is a mixture of decyl succinic anhydride and decenyl succinic anhydride. Alternatively, the at least one mono-substituted succinic anhydride is a mixture of dodecyl succinic anhydride and dodecenyl succinic anhydride. Alternatively, the at least one mono-substituted succinic anhydride is a mixture of hexadecanyl succinic anhydride and hexadecenyl succinic anhydride. For example, the at least one mono-substituted succinic anhydride is a mixture of linear hexadecanyl succinic anhydride and linear hexadecenyl succinic anhydride or a mixture of branched hexadecanyl succinic anhydride and branched hexadecenyl succinic anhydride. Alternatively, the at least one mono-substituted succinic anhydride is a mixture of octadecanyl succinic anhydride and octadecenyl succinic anhydride. For example, the at least one mono-substituted succinic anhydride is a mixture of linear octadecanyl succinic anhydride and linear octadecenyl succinic anhydride or a mixture of branched octadecanyl succinic anhydride and branched octadecenyl succinic anhydride.

In one embodiment of the present invention, the at least one mono-substituted succinic anhydride is a mixture of nonylsuccinic anhydride and nonenylsuccinic anhydride.

If the at least one mono-substituted succinic anhydride is a mixture of at least one alkyl mono-substituted succinic anhydrides and at least one alkenyl mono-substituted succinic anhydrides, the weight ratio between the at least one alkyl mono-substituted succinic anhydride and the at least one alkenyl mono-substituted succinic anhydride is between 90:10 and 10:90 (wt.-%/wt.-%). For example, the weight ratio between the at least one alkyl mono-substituted succinic anhydride and the at least one alkenyl mono-substituted succinic anhydride is between 70:30 and 30:70 (wt.-% / wt.-%) or between 60:40 and 40:60 (wt.-% / wt.-%).

It is appreciated that the expression "at least one" mono-substituted succinic acid means that one or more kinds of mono-substituted succinic acid may be provided in the process of the present invention.

Accordingly, it should be noted that the at least one mono-substituted succinic acid may be one kind of mono-substituted succinic acid. Alternatively, the at least one mono-substituted succinic acid may be a mixture of two or more kinds of mono-substituted succinic acid. For example, the at least one mono-substituted succinic acid may be a mixture of two or three kinds of mono-substituted succinic acid, like two kinds of mono-substituted succinic acid.

In one embodiment of the present invention, the at least one mono-substituted succinic acid is one kind of mono-substituted succinic acid.

It is appreciated that the at least one mono-substituted succinic acid represents a surface treatment agent and consists of succinic acid mono-substituted with a group selected from any linear, branched, aliphatic and cyclic group having a total amount of carbon atoms from C2 to C30 in the substituent.

In one embodiment of the present invention, the at least one mono-substituted succinic acid consists of succinic acid mono-substituted with a group selected from a linear, branched, aliphatic and cyclic group having a total amount of carbon atoms from C3 to C25 in the substituent. For example, the at least one mono-substituted succinic acid consists of succinic acid mono-substituted with a group selected from a linear, branched, aliphatic and cyclic group having a total amount of carbon atoms from C4 to C20 in the substituent.

It is appreciated that the at least one mono-substituted succinic anhydride and the at least one mono-substituted succinic acid may comprise the same or different substituent.

In one embodiment of the present invention, the succinic acid molecule of the at least one mono-substituted succinic acid and the succinic anhydride molecule of the at least one mono-substituted succinic anhydride are mono-substituted with the same group selected from any linear, branched, aliphatic and cyclic group having a total amount of carbon atoms from C2 to C30, preferably from C3 to C25 and most preferably from C4 to C20 in the substituent.

If the at least one mono-substituted succinic anhydride is provided in combination with at least one mono-substituted succinic acid, the at least one mono-substituted succinic acid is present in an amount of ≤ 10 mol.-%, based on the molar sum of the at least one mono-substituted succinic anhydride and the at least one mono-substituted succinic acid. For example, the at least one mono-substituted succinic acid is present in an amount of ≤ 5 mol.-%, preferably of ≤ 2.5 mol.-% and most preferably of ≤ 1 mol.-%, based on the molar sum of the at least one mono-substituted succinic anhydride and the at least one mono-substituted succinic acid.

According to one embodiment the salty reaction product(s) of the mono-substituted succinic acid and/or the at least one mono-substituted succinic anhydride are one or more calcium and/or magnesium salts thereof.

According to one embodiment the salty reaction product(s) of the mono-substituted succinic acid and/or the at least one mono-substituted succinic anhydride formed on at least a part of the surface of the filler material, preferably the calcium carbonate-comprising filler material, are one or more calcium salts and/or one or more magnesium salts thereof.

According to one embodiment the molar ratio of the at least one mono-substituted succinic anhydride and the optional at least one mono-substituted succinic acid to the salty reaction product(s) thereof is from 99.9:0.1 to 0.1:99.9, preferably from 70:30 to 90:10.

According to one embodiment the treatment layer further comprises an organic material such as a polysiloxane.

According to one embodiment of the present invention, the surface-treated filler material comprises, and preferably consists of, a filler material, preferably a calcium carbonate-comprising filler material, and a treatment layer comprising at least one mono-substituted succinic anhydride and/or at least one mono-substituted succinic acid and/or salty reaction product(s) thereof. The treatment layer is formed on at least a part of the surface, preferably on the whole surface, of said filler material, preferably the calcium carbonate-comprising filler material.

In case the treatment layer on the surface of the filler material, preferably a calcium carbonate-comprising filler material, comprises at least one mono-substituted succinic acid, it is preferred that the at least one mono-substituted succinic acid is formed from the applied at least one mono-substituted succinic anhydride. That is to say, the substituent of the at least one mono-substituted succinic acid and the substituent of the at least one mono-substituted succinic anhydride are the same.

Additionally or alternatively, the at least one mono-substituted succinic acid is provided in a blend together with the at least one mono-substituted succinic anhydride.

In one embodiment of the present invention, the treatment layer formed on the surface of the filler material, preferably the calcium carbonate-comprising filler material, comprises the at least one mono-substituted succinic anhydride and at least one mono-substituted succinic acid or salty reaction product(s) thereof obtained from contacting the filler material, preferably the calcium carbonate-comprising filler material, with the at least one mono-substituted succinic anhydride and the optional at least one mono-substituted succinic acid. Alternatively, the treatment layer formed on the surface of the filler material, preferably the calcium carbonate-comprising filler material, comprises the at least one mono-substituted succinic anhydride and at least one mono-substituted succinic acid and salty reaction product(s) thereof obtained from contacting the filler material, preferably the calcium carbonate-comprising filler material, with the at least one mono-substituted succinic anhydride and the optional at least one mono-substituted succinic acid.

According to another embodiment of the present invention, the at least one surface-treated filler material, preferably the surface treated calcium carbonate-comprising filler material, comprises a treatment layer on at least a part of the surface of the filler material, preferably the calcium carbonate-comprising filler material, wherein the treatment layer comprises a phosphoric acid ester or blend of one or more phosphoric acid mono-ester and salty reaction products thereof and/or one or more phosphoric acid di-ester and salty reaction products thereof.

According to still another embodiment of the present invention, the at least one surface-treated filler material, preferably the surface-treated calcium carbonate-comprising filler material, comprises a treatment layer on at least a part of the surface of the filler material, preferably the calcium carbonate-comprising filler material, wherein the treatment layer comprises at least one mono-substituted succinic anhydride and/or at least one mono-substituted succinic acid and/or salty reaction products thereof, and a phosphoric acid ester or blend of one or more phosphoric acid mono-ester and salty reaction products thereof and/or one or more phosphoric acid di-ester and salty reaction products thereof.

The term "phosphoric acid mono-ester" in the meaning of the present invention refers to an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent.

The term "phosphoric acid di-ester" in the meaning of the present invention refers to an o-phosphoric acid molecule di-esterified with two alcohol molecules selected from the same or different, unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent.

The term "salty reaction products of a phosphoric acid ester or blend of one or more phosphoric acid mono-esters and/or one or more phosphoric acid di-esters" in the meaning of the present invention refers to products obtained by contacting a calcium carbonate-comprising filler material with one or more phosphoric acid mono-ester and one or more phosphoric acid di-ester and optionally phosphoric acid. Said salty reaction products are formed between the applied one or more phosphoric acid mono-ester and one or more phosphoric acid di-ester and optionally phosphoric acid and reactive molecules located at the surface of the calcium carbonate-comprising filler material.

Alkyl esters of phosphoric acid are well known in the industry especially as surfactants, lubricants and antistatic agents (Die Tenside; Kosswig und Stache, Carl Hanser Verlag München, 1993).

The synthesis of alkyl esters of phosphoric acid by different methods and the surface treatment of minerals with alkyl esters of phosphoric acid are well known by the skilled man, e.g. from Pesticide Formulations and Application Systems: 15th Volume; Collins HM, Hall FR, Hopkinson M, STP1268; Published: 1996, US 3,897,519 A, US 4,921,990 A, US 4,350,645 A, US 6,710,199 B2, US 4,126,650 A, US 5,554,781 A, EP 1092000 B1 and WO 2008/023076 A1.

It is appreciated that the expression "one or more" phosphoric acid mono-ester means that one or more kinds of phosphoric acid mono-ester may be present in the phosphoric acid ester blend.

Accordingly, it should be noted that the one or more phosphoric acid mono-ester may be one kind of phosphoric acid mono-ester. Alternatively, the one or more phosphoric acid mono-ester may be a mixture of two or more kinds of phosphoric acid mono-ester. For example, the one or more phosphoric acid mono-ester may be a mixture of two or three kinds of phosphoric acid mono-ester, like two kinds of phosphoric acid mono-ester.

In one embodiment of the present invention, the one or more phosphoric acid mono-ester consists of an o-phosphoric acid molecule esterified with one alcohol selected from unsaturated or saturated, branched or linear, aliphatic or aromatic alcohols having a total amount of carbon atoms from C6 to C30 in the alcohol substituent. For example, the one or more phosphoric acid mono-ester consists of an o-phosphoric acid molecule esterified with one alcohol selected from unsaturated or saturated, branched or linear, aliphatic or aromatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear or branched and aliphatic alcohols having a total amount of carbon atoms from C6 to C30 in the alcohol substituent. For example, the one or more phosphoric acid mono-ester consists of an o-phosphoric acid molecule esterified with one alcohol selected from saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid mono-ester consists of an o-phosphoric acid molecule esterified with one alcohol selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid mono-ester consists of an o-phosphoric acid molecule esterified with one alcohol selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid mono-ester is selected from the group comprising hexyl phosphoric acid mono-ester, heptyl phosphoric acid mono-ester, octyl phosphoric acid mono-ester, 2-ethylhexyl phosphoric acid mono-ester, nonyl phosphoric acid mono-ester, decyl phosphoric acid mono-ester, undecyl phosphoric acid mono-ester, dodecyl phosphoric acid mono-ester, tetradecyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof.

For example, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof. In one embodiment of the present invention, the one or more phosphoric acid mono-ester is 2-octyl-1-dodecylphosphoric acid mono-ester.

It is appreciated that the expression "one or more" phosphoric acid di-ester means that one or more kinds of phosphoric acid di-ester may be present in the treatment layer of the surface-treated material product and/or the phosphoric acid ester blend.

Accordingly, it should be noted that the one or more phosphoric acid di-ester may be one kind of phosphoric acid di-ester. Alternatively, the one or more phosphoric acid di-ester may be a mixture of two or more kinds of phosphoric acid di-ester. For example, the one or more phosphoric acid di-ester may be a mixture of two or three kinds of phosphoric acid di-ester, like two kinds of phosphoric acid di-ester.

In one embodiment of the present invention, the one or more phosphoric acid di-ester consists of an o-phosphoric acid molecule esterified with two alcohols selected from unsaturated or saturated, branched or linear, aliphatic or aromatic alcohols having a total amount of carbon atoms from C6 to C30 in the alcohol substituent. For example, the one or more phosphoric acid di-ester consists of an o-phosphoric acid molecule esterified with two fatty alcohols selected from unsaturated or saturated, branched or linear, aliphatic or aromatic alcohols having a total amount of carbon atoms from C8 to C22, more preferably from C8 to C20 and most preferably from C8 to C18 in the alcohol substituent.

It is appreciated that the two alcohols used for esterifying the phosphoric acid may be independently selected from the same or different, unsaturated or saturated, branched or linear, aliphatic or aromatic alcohols having a total amount of carbon atoms from C6 to C30 in the alcohol substituent. In other words, the one or more phosphoric acid di-ester may comprise two substituents being derived from the same alcohols or the phosphoric acid di-ester molecule may comprise two substituents being derived from different alcohols.

In one embodiment of the present invention, the one or more phosphoric acid di-ester consists of an o-phosphoric acid molecule esterified with two alcohols selected from the same or different, saturated and linear or branched and aliphatic alcohols having a total amount of carbon atoms from C6 to C30 in the alcohol substituent. For example, the one or more phosphoric acid di-ester consists of an o-phosphoric acid molecule esterified with two alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid di-ester consists of an o-phosphoric acid molecule esterified with two alcohols selected from the same or different, saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid di-ester consists of an o-phosphoric acid molecule esterified with two alcohols selected from the same or different, saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid di-ester is selected from the group comprising hexyl phosphoric acid di-ester, heptyl phosphoric acid di-ester, octyl phosphoric acid di-ester, 2-ethylhexyl phosphoric acid di-ester, nonyl phosphoric acid di-ester, decyl phosphoric acid di-ester, undecyl phosphoric acid di-ester, dodecyl phosphoric acid di-ester, tetradecyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof. In one embodiment of the present invention, the one or more phosphoric acid di-ester is 2-octyl-1-dodecylphosphoric acid di-ester.

In one embodiment of the present invention, the one or more phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester, 2-octyl-1-dodecylphosphoric acid mono-ester and mixtures thereof and the one or more phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester, 2-octyl-1-dodecylphosphoric acid di-ester and mixtures thereof.

For example, at least a part of the surface of the calcium carbonate-comprising filler material comprises a phosphoric acid ester blend of one phosphoric acid mono-ester and salty reaction products thereof and one phosphoric acid di-ester and salty reaction products thereof. In this case, the one phosphoric acid mono-ester is selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decylphosphoric acid mono-ester and 2-octyl-1-dodecylphosphoric acid mono-ester, the one phosphoric acid di-ester is selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decylphosphoric acid di-ester and 2-octyl-1-dodecylphosphoric acid di-ester.

If at least a part of the surface of the at least one filler material, preferably of the at least one calcium carbonate-comprising filler material, comprises a phosphoric acid ester blend of one phosphoric acid mono-ester and salty reaction products thereof and one phosphoric acid di-ester and salty reaction products thereof, it is appreciated that the alcohol substituent of the one phosphoric acid mono-ester and the one phosphoric acid di-ester are preferably the same. For example, at least a part of the surface of the at least one filler material, preferably of the at least one calcium carbonate-comprising filler material, comprises a phosphoric acid ester blend of 2-ethylhexyl phosphoric acid mono-ester and salty reaction products thereof and 2-ethylhexyl phosphoric acid di-ester and salty reaction products thereof. Alternatively, at least a part of the surface of the at least one filler material, preferably of the at least one calcium carbonate-comprising filler material, comprises a phosphoric acid ester blend of 2-octyl-1-decyl phosphoric acid mono-ester and salty reaction products thereof and 2-octyl-1-decyl phosphoric acid di-ester and salty reaction products thereof. Alternatively, at least a part of the surface of the at least one filler material, preferably of the at least one calcium carbonate-comprising filler material, comprises a phosphoric acid ester blend of hexadecyl phosphoric acid mono-ester and salty reaction products thereof and hexadecyl phosphoric acid di-ester and salty reaction products thereof. Alternatively, at least a part of the surface of the at least one filler material, preferably of the at least one calcium carbonate-comprising filler material, comprises a phosphoric acid ester blend of octadecyl phosphoric acid mono-ester and salty reaction products thereof and octadecyl phosphoric acid di-ester and salty reaction products thereof. Alternatively, at least a part of the surface of the at least one filler material, preferably of the at least one calcium carbonate-comprising filler material, comprises a phosphoric acid ester blend of 2-octyl-1-dodecylphosphoric acid mono-ester and salty reaction products thereof and 2-octyl-1-dodecylphosphoric acid di-ester and salty reaction products thereof.

In one embodiment of the present invention, at least a part of the surface of the at least one filler material, preferably of the at least one calcium carbonate-comprising filler material, comprises a phosphoric acid ester blend of two or more phosphoric acid mono-esters and salty reaction products thereof and two or more phosphoric acid di-ester and salty reaction products thereof. In this case, the two or more phosphoric acid mono-esters are selected from the group comprising 2-ethylhexyl phosphoric acid mono-ester, hexadecyl phosphoric acid mono-ester, heptylnonyl phosphoric acid mono-ester, octadecyl phosphoric acid mono-ester, 2-octyl-1-decyl phosphoric acid mono-ester and 2-octyl-1-dodecylphosphoric acid mono-ester, the two or more phosphoric acid di-ester are selected from the group comprising 2-ethylhexyl phosphoric acid di-ester, hexadecyl phosphoric acid di-ester, heptylnonyl phosphoric acid di-ester, octadecyl phosphoric acid di-ester, 2-octyl-1-decyl phosphoric acid di-ester and 2-octyl-1-dodecylphosphoric acid di-ester.

In one embodiment of the present invention, at least a part of the surface of the at least one filler material, preferably of the at least one calcium carbonate-comprising filler material, comprises a phosphoric acid ester blend of two phosphoric acid mono-esters and salty reaction products thereof and two phosphoric acid di-esters and salty reaction products thereof. For example, at least a part of the surface of the at least one filler material, preferably of the at least one calcium carbonate-comprising filler material, comprises a phosphoric acid ester blend of hexadecyl phosphoric acid mono-ester, octadecyl phosphoric acid mono-ester, hexadecyl phosphoric acid di-ester, octadecyl phosphoric acid di-ester and salty reaction products thereof and salty reaction products thereof.

According to one embodiment of the present invention, the phosphoric acid ester blend of the at least one filler material, preferably of the at least one calcium carbonate-comprising filler material, comprises the one or more phosphoric acid mono-ester and salty reaction products thereof to the one or more phosphoric acid di-ester and salty reaction products thereof in a specific molar ratio. In particular, the molar ratio of the one or more phosphoric acid mono-ester and salty reaction products thereof to the one or more phosphoric acid di-ester and salty reaction products thereof in the coating layer and/or the phosphoric acid ester blend can be from 1:1 to 1:100.

The wording "molar ratio of the one or more phosphoric acid mono-ester and salty reaction products thereof to the one or more phosphoric acid di-ester and salty reaction products thereof" in the meaning of the present invention refers to the sum of the molecular weight of the phosphoric acid mono-ester molecules and the sum of the molecular weight of the phosphoric acid mono-ester molecules in the salty reaction products thereof to the sum of the molecular weight of the phosphoric acid di-ester molecules and the sum of the molecular weight of the phosphoric acid di-ester molecules in the salty reaction products thereof.

According to one embodiment the molar ratio of the one or more phosphoric acid mono-ester and salty reaction products thereof to the one or more phosphoric acid di-ester and salty reaction products thereof in the phosphoric acid ester blend is from 1:1 to 1:100, preferably from 1:1.1 to 1:80, more preferably from 1:1.1 to 1:60, even more preferably from 1:1.1 to 1:40, still even more preferably from 1:1.1 to 1:20, and most preferably from 1:1.1 to 1:10.

Additionally or alternatively, the phosphoric acid ester blend of the treatment layer comprises the one or more phosphoric acid mono-ester and salty reaction products thereof in an amount of from 1 to 50 mol.-%, based on the molar sum of the one or more phosphoric acid mono-ester and salty reaction products thereof and the one or more phosphoric acid di-ester and salty reaction products thereof. For example, the phosphoric acid ester blend of the treatment layer comprises the one or more phosphoric acid mono-ester and salty reaction products thereof in an amount of from 10 to 45 mol.-%, based on the molar sum of the one or more phosphoric acid mono-ester and salty reaction products thereof and the one or more phosphoric acid di-ester and salty reaction products thereof.

According to one embodiment of the present invention,
I) the one or more phosphoric acid mono-ester consists of an ophosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or
II) the one or more phosphoric acid di-ester consists of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent.

In one embodiment of the present invention, the phosphoric acid ester blend of the treatment layer further comprises one or more phosphoric acid tri-ester and/or phosphoric acid and salty reaction products thereof.
The term "phosphoric acid tri-ester" in the meaning of the present invention refers to an o-phosphoric acid molecule tri-esterified with three alcohol molecules selected from the same or different, unsaturated or saturated, branched or linear, aliphatic or aromatic alcohols having a total amount of carbon atoms from C6 to C30, preferably from C8 to C22, more preferably from C8 to C20 and most preferably from C8 to C18 in the alcohol substituent.

It is appreciated that the expression "one or more" phosphoric acid tri-ester means that one or more kinds of phosphoric acid tri-ester may be present on at least a part of the surface of the at least one filler material, preferably of the at least one calcium carbonate-comprising filler material.

Accordingly, it should be noted that the one or more phosphoric acid tri-ester may be one kind of phosphoric acid tri-ester. Alternatively, the one or more phosphoric acid tri-ester may be a mixture of two or more kinds of phosphoric acid tri-ester. For example, the one or more phosphoric acid tri-ester may be a mixture of two or three kinds of phosphoric acid tri-ester, like two kinds of phosphoric acid tri-ester.

In one embodiment of the present invention, the one or more phosphoric acid tri-ester consists of an o-phosphoric acid molecule esterified with three alcohols selected from the same or different, unsaturated or saturated, branched or linear, aliphatic or aromatic alcohols having a total amount of carbon atoms from C6 to C30 in the alcohol substituent. For example, the one or more phosphoric acid tri-ester consists of an o-phosphoric acid molecule esterified with three alcohols selected from the same or different, unsaturated or saturated, branched or linear, aliphatic or aromatic fatty alcohols having a total amount of carbon atoms from C8 to C22, more preferably from C8 to C20 and most preferably from C8 to C18 in the alcohol substituent.

It is appreciated that the three alcohols used for esterifying the phosphoric acid may be independently selected from unsaturated or saturated, branched or linear, aliphatic or aromatic alcohols having a total amount of carbon atoms from C6 to C30 in the alcohol substituent. In other words, the one or more phosphoric acid tri-ester molecule may comprise three substituents being derived from the same alcohols or the phosphoric acid tri-ester molecule may comprise three substituents being derived from different alcohols.

In one embodiment of the present invention, the one or more phosphoric acid tri-ester consists of an o-phosphoric acid molecule esterified with three alcohols selected from the same or different, saturated and linear or branched and aliphatic alcohols having a total amount of carbon atoms from C6 to C30 in the alcohol substituent. For example, the one or more phosphoric acid tri-ester consists of an o-phosphoric acid molecule esterified with three alcohols selected from the same or different, saturated and linear or branched and aliphatic alcohols having a total amount of carbon atoms from C8 to C22, more preferably from C8 to C20 and most preferably from C8 to C18 in the alcohol substituent.

In one embodiment of the present invention, the one or more phosphoric acid tri-ester consists of an o-phosphoric acid molecule esterified with three alcohols selected from saturated and linear and aliphatic alcohols having a total amount of carbon atoms from C6 to C30, preferably from C8 to C22, more preferably from C8 to C20 and most preferably from C8 to C18 in the alcohol substituent. Alternatively, the one or more phosphoric acid tri-ester consists of an o-phosphoric acid molecule esterified with three alcohols selected from saturated and branched and aliphatic alcohols having a total amount of carbon atoms from C6 to C30, preferably from C8 to C22, more preferably from C8 to C20 and most preferably from C8 to C18 in the alcohol substituent.

In one embodiment of the present invention, the one or more phosphoric acid tri-ester is selected from the group comprising hexyl phosphoric acid tri-ester, heptyl phosphoric acid tri-ester, octyl phosphoric acid tri-ester, 2-ethylhexyl phosphoric acid tri-ester, nonyl phosphoric acid tri-ester, decyl phosphoric acid tri-ester, undecyl phosphoric acid tri-ester, dodecyl phosphoric acid tri-ester, tetradecyl phosphoric acid tri-ester, hexadecyl phosphoric acid tri-ester, heptylnonyl phosphoric acid tri-ester, octadecyl phosphoric acid tri-ester, 2-octyl-1-decylphosphoric acid tri-ester, 2-octyl-1-dodecylphosphoric acid tri-ester and mixtures thereof.

For example, the one or more phosphoric acid tri-ester is selected from the group comprising 2-ethylhexyl phosphoric acid tri-ester, hexadecyl phosphoric acid tri-ester, heptylnonyl phosphoric acid tri-ester, octadecyl phosphoric acid tri-ester, 2-octyl-1-decylphosphouc acid tri-ester, 2-octyl-1-dodecylphosphoric acid tri-ester and mixtures thereof.

In one embodiment of the present invention, at least a part of the surface of the at least one filler material, preferably of the at least one calcium carbonate-comprising filler material, comprises a phosphoric acid ester blend of one or more phosphoric acid mono-ester and salty reaction products thereof and one or more phosphoric acid di-ester and salty reaction products thereof and one or more phosphoric acid tri-ester and optionally phosphoric acid and salty reaction products thereof. For example, at least a part of the surface of the at least one filler material, preferably of the at least one calcium carbonate-comprising filler material, comprises a phosphoric acid ester blend of the one or more phosphoric acid mono-ester and salty reaction products thereof and one or more phosphoric acid di-ester and salty reaction products thereof and one or more phosphoric acid tri-ester and phosphoric acid and salty reaction products thereof.

Alternatively, at least a part of the surface of the at least one filler material, preferably of the at least one calcium carbonate-comprising filler material, comprises a phosphoric acid ester blend of the one or more phosphoric acid mono-ester and salty reaction products thereof and one or more phosphoric acid di-ester and salty reaction products thereof and optionally phosphoric acid and salty reaction products thereof. For example, at least a part of the surface of the at least one filler material, preferably of the at least one calcium carbonate-comprising filler material, comprises a phosphoric acid ester blend of the one or more phosphoric acid mono-ester and salty reaction products thereof and one or more phosphoric acid di-ester and salty reaction products thereof and phosphoric acid and salty reaction products thereof.

If at least a part of the surface of the at least one filler material, preferably of the at least one calcium carbonate-comprising filler material, comprises a phosphoric acid ester blend comprising one or more phosphoric acid tri-ester, it is preferred that the phosphoric acid ester blend comprises the one or more phosphoric acid tri-ester in an amount of ≤ 10 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof. For example, the phosphoric acid ester blend comprises the one or more phosphoric acid tri-ester in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof.

Additionally or alternatively, if at least a part of the surface of the at least one filler material, preferably of the at least one calcium carbonate-comprising filler material, comprises a phosphoric acid ester blend comprising phosphoric acid and salty reaction products thereof, it is preferred that the phosphoric acid ester blend comprises the phosphoric acid and salty reaction products thereof in an amount of ≤ 10 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof. For example, the phosphoric acid ester blend comprises the phosphoric acid and salty reaction products thereof in an amount of ≤ 8 mol.-%, preferably of ≤ 6 mol.-%, and more preferably of ≤ 4 mol.-%, like from 0.1 to 4 mol.-%, based on the molar sum of the one or more phosphoric acid mono-ester and salty reaction products thereof and the one or more phosphoric acid di-ester and salty reaction products thereof and one or more phosphoric acid tri-ester and the phosphoric acid and salty reaction products thereof.

If the phosphoric acid ester blend further comprises phosphoric acid and salty reaction products thereof and one or more phosphoric acid tri-ester, it is thus preferred that the molar ratio of the phosphoric acid and salty reaction products thereof to the one or more phosphoric acid mono-ester and salty reaction products thereof to the one or more phosphoric acid di-ester and salty reaction products thereof to the one or more phosphoric acid tri-ester in the phosphoric acid ester blend is ≤ 10 mol.-% : ≤ 40 mol.-% : ≥ 40 mol.% : ≤ 10 mol.-%, based on the molar sum of the one or more phosphoric acid mono-ester and salty reaction products thereof and the one or more phosphoric acid di-ester and salty reaction products thereof and the one or more phosphoric acid tri-ester and the phosphoric acid and salty reaction products thereof.

The wording "molar ratio of the phosphoric acid and salty reaction products thereof to the one or more phosphoric acid mono-ester and salty reaction products thereof to the one or more phosphoric acid di-ester and salty reaction products thereof to the one or more phosphoric acid tri-ester" in the meaning of the present invention refers to the sum of the molecular weight of the phosphoric acid and the sum of the molecular weight of the phosphoric acid molecules in the salty reaction products thereof to the sum of the molecular weight of the phosphoric acid mono-ester molecules and the sum of the molecular weight of the phosphoric acid mono-ester molecules in the salty reaction products thereof to the sum of the molecular weight of the phosphoric acid di-ester molecules and the sum of the molecular weight of the phosphoric acid di-ester molecules in the salty reaction products thereof to the sum of the molecular weight of the phosphoric acid tri-ester molecules.

It is appreciated that the phosphoric acid ester blend may comprise salty reaction products obtained from contacting the at least one filler material, preferably the at least one calcium carbonate-comprising filler material, with the one or more phosphoric acid mono-ester and one or more phosphoric acid di-ester and optionally phosphoric acid. In such a case, the phosphoric acid ester blend preferably comprises salty reaction products such as one or more strontium, calcium, magnesium and/or aluminium salts of phosphoric acid mono-esters and one or more calcium, magnesium and/or aluminium salts of phosphoric acid di-ester and optionally one or more strontium, calcium, magnesium and/or aluminium salts of phosphoric acid.

In one embodiment of the present invention, the one or more phosphoric acid mono-ester and/or the one or more phosphoric acid di-ester and optionally the phosphoric acid may be at least partially neutralized by one or more hydroxides of a mono- and/or bi- and/or trivalent cation and/or one or more salts of a weak acid of a mono- and/or bi- and/or trivalent cation before the at least one filler material, preferably the at least one calcium carbonate-comprising filler material, is prepared. The one or more hydroxides of a bi- and/or trivalent cation may be selected from Ca(OH)₂, Mg(OH)₂, Al(OH)₃ and mixtures thereof.

Additionally or alternatively, if the one or more phosphoric acid mono-ester and/or the one or more phosphoric acid di-ester and optionally the phosphoric acid is at least partially neutralized by one or more hydroxides and/or one or more salts of a weak acid of a monovalent cation, the amount of monovalent cations is preferably ≤ 10 mol.-%, based on the molar sum of acidic groups in the one or more phosphoric acid mono-ester and the one or more phosphoric acid di-ester and optionally the phosphoric acid, the one or more hydroxide and/or the one or more salt of a weak acid of a monovalent cation to neutralize may be selected from LiOH, NaOH, KOH, Na₂CO₃, Li₂CO₃, K₂CO₃ and mixtures thereof.

In one embodiment of the present invention, the bivalent cations used for the partial neutralization of the one or more phosphoric acid mono-ester and/or the one or more phosphoric acid di-ester and optional the phosphoric acid are derived from salts of weak acids of such cations, preferably from carbonates and/or borates, such as calcium carbonate.

The term "weak acid" in the meaning of the present application refers to a Bronsted-Lowry acid, i.e. an H₃O⁺ -ion provider, featuring a pKₐ of > 2, preferably from 4 to 7.

Accordingly, the phosphoric acid ester blend of the treatment layer may further comprise salty reaction products such as one or more magnesium salts of phosphoric acid mono-esters and one or more magnesium salts of phosphoric acid di-ester and optionally one or more magnesium salts of phosphoric acid. Additionally or alternatively, the phosphoric acid ester blend of the treatment layer further comprises salty reaction products such as one or more aluminium salts of phosphoric acid mono-esters and one or more aluminium salts of phosphoric acid di-ester and optionally one or more aluminium salts of phosphoric acid. Additionally or alternatively, the phosphoric acid ester blend of the treatment layer further comprises salty reaction products such as one or more lithium salts of phosphoric acid mono-esters and one or more lithium salts of phosphoric acid di-ester and optionally one or more lithium salts of phosphoric acid. Additionally or alternatively, the phosphoric acid ester blend of the treatment layer further comprises salty reaction products such as one or more sodium salts of phosphoric acid mono-esters and one or more sodium salts of phosphoric acid di-ester and optionally one or more sodium salts of phosphoric acid. Additionally or alternatively, the phosphoric acid ester blend of the treatment layer further comprises salty reaction products such as one or more potassium salts of phosphoric acid mono-esters and one or more potassium salts of phosphoric acid di-ester and optionally one or more potassium salts of phosphoric acid.

If the one or more phosphoric acid mono-ester and/or the one or more phosphoric acid di-ester and optionally the phosphoric acid is at least partially neutralized by one or more hydroxides and/or one or more salts of a weak acid of a monovalent cation, the treatment layer and/or the phosphoric acid ester blend preferably comprises an amount of monovalent cations of ≤ 10 mol.-%, based on the molar sum of acidic groups in the one or more phosphoric acid mono-ester and the one or more phosphoric acid di-ester and optionally the phosphoric acid.

In one embodiment of the present invention, the phosphoric acid ester blend of the treatment layer may further comprise additional surface treatment agents that do not correspond to the one or more phosphoric acid mono-ester, one or more phosphoric acid di-ester and the optional one or more phosphoric acid tri-ester and/or phosphoric acid of the present invention.

According to another embodiment of the present invention, the surface-treated filler material, preferably the surface treated calcium carbonate-comprising filler material, comprises a treatment layer on at least a part of the surface of the filler material, preferably of the calcium carbonate-comprising filler material, wherein the treatment layer comprises at least one saturated aliphatic linear or branched carboxylic acid. More preferably, the at least one surface-treated filler material, preferably the surface treated calcium carbonate-comprising filler material, comprises a treatment layer on at least a part of the surface of the filler material, preferably of the calcium carbonate-comprising filler material, wherein the treatment layer comprises at least one saturated aliphatic linear or branched carboxylic acid and/or reaction products thereof.

In one embodiment, the treatment layer comprises an aliphatic carboxylic acid having a total amount of carbon atoms from C4 to C24 and/or reaction products thereof.

The term "reaction products" of the aliphatic linear or branched carboxylic acid in the meaning of the present invention refers to products obtained by contacting the surface-treated filler material, preferably the surface treated calcium carbonate-comprising filler material, with the at least one aliphatic linear or branched carboxylic acid. Said reaction products are formed between at least a part of the applied at least one aliphatic linear or branched carboxylic acid and reactive molecules located at the surface of the at least one filler material, preferably of the at least one calcium carbonate-comprising filler material.

The aliphatic carboxylic acid in the meaning of the present invention may be selected from one or more linear chain, branched chain, saturated, unsaturated and/or alicyclic carboxylic acids. Preferably, the aliphatic carboxylic acid is a monocarboxylic acid, i.e. the aliphatic carboxylic acid is characterized in that a single carboxyl group is present. Said carboxyl group is placed at the end of the carbon skeleton.

In one embodiment of the present invention, the aliphatic linear or branched carboxylic acid is selected from saturated unbranched carboxylic acids, that is to say the aliphatic carboxylic acid is preferably selected from the group of carboxylic acids consisting of pentanoic acid, hexanoic acid, heptanoic acid, octanoic acid, nonanoic acid, decanoic acid, undecanoic acid, lauric acid, tridecanoic acid, myristic acid, pentadecanoic acid, palmitic acid, heptadecanoic acid, stearic acid, nonadecanoic acid, arachidic acid, heneicosylic acid, behenic acid, tricosylic acid, lignoceric acid and mixtures thereof.

In another embodiment of the present invention, the aliphatic linear or branched carboxylic acid is selected from the group consisting of octanoic acid, decanoic acid, lauric acid, myristic acid, palmitic acid, stearic acid, arachidic acid and mixtures thereof. Preferably, the aliphatic linear or branched carboxylic acid is selected from the group consisting of octanoic acid, myristic acid, palmitic acid, stearic acid and mixtures thereof.

For example, the aliphatic linear or branched carboxylic acid is octanoic acid or stearic acid.

According to another embodiment of the present invention, the surface treated filler material, preferably the surface treated calcium carbonate-comprising filler material, comprises a treatment layer on at least a part of the surface of the filler material, preferably of the calcium carbonate-comprising filler material, wherein the treatment layer comprises at least one polydialkylsiloxane.

For example, the at least one polydialkylsiloxane is preferably a polydimethylsiloxane (PDMS).

The at least one polydialkylsiloxane is preferably present in a quantity such that the total amount of said polydialkylsiloxane on at least a part of the surface of the at least one filler material, preferably the at least one calcium carbonate-comprising filler material, is less than 1 000 ppm, more preferably less than 800 ppm and most preferably less than 600 ppm. For example, the total amount of the polydialkylsiloxane on at least a part of the surface of the at least one filler material, preferably the at least one calcium carbonate-comprising filler material, is from 100 to 1 000 ppm, more preferably from 200 to 800 ppm and most preferably from 300 to 600 ppm, e.g. from 400 to 600 ppm.

The at least one surface-treated filler material, preferably the at least one surface treated calcium carbonate-comprising filler material, has excellent surface characteristics.

In particular, it is appreciated that according to one embodiment the at least one surface-treated filler material, preferably the at least one surface treated calcium carbonate-comprising filler material, has a volatile onset temperature of ≥ 250°C, preferably of ≥ 260°C, and most preferably of ≥ 270°C.

Additionally or alternatively, the at least one surface-treated filler material, preferably the at least one surface treated calcium carbonate-comprising filler material, has total volatiles between 25 and 350°C of less than 0.25 % by mass, and preferably of less than 0.23 % by mass, e.g. of from 0.04 to 0.21 % by mass, preferably from 0.08 to 0.15 % by mass, more preferably from 0.1 to 0.12 % by mass.

Furthermore, the at least one surface-treated filler material, preferably the at least one surface treated calcium carbonate-comprising filler material, may feature a low water pick up susceptibility. It is preferred that the moisture pick up susceptibility of the at least one surface-treated filler material, preferably the at least one surface treated calcium carbonate-comprising filler material, is such that its total surface moisture level is less than 1 mg/g of dry filler material, preferably of dry calcium carbonate-comprising filler material, at a temperature of about +23°C (± 2°C). For example, the at least one surface-treated filler material, preferably the at least one surface treated calcium carbonate-comprising filler material, has a moisture pick up susceptibility from 0.1 to 1 mg/g, more preferably from 0.2 to 0.9 mg/g; and most preferably of from 0.2 to 0.8 mg/g of dry filler material, preferably of dry calcium carbonate-comprising filler material, at a temperature of +23°C (± 2°C).

The term "moisture pick-up susceptibility" in the meaning of the present invention refers to the amount of moisture adsorbed on the surface of the filler material or surface-treated filler material and can be determined in mg moisture/g of the dry filler material or surface-treated filler material after exposure to an atmosphere of 10 and 85 % of relative humidity, resp., for 2.5 hours at a temperature of +23 °C (± 2 °C).

For the purpose of the present application, the "volatile onset temperature" is defined as the temperature at which volatiles - including volatiles introduced as a result of common mineral filler material preparation steps including grinding, with or without grinding aid agents, beneficiation, with or without flotation aid or other agents, and other pre-treatment agents not expressly listed above, detected according to the thermogravimetric analysis described hereafter - begin to evolve, as observed on a thermogravimetric (TGA) curve, plotting the mass of remaining sample (y-axis) as a function of temperature (*x*-axis), the preparation and interpretation of such a curve being defined hereafter.

The volatile onset temperature can be measured by a thermogravimetric analytical (TGA) method, which provides information regarding losses of mass and volatile onset temperatures with great accuracy, and is common knowledge; it is, for example, described in "Principles of instrumental analysis"', fifth edition, Skoog, Holler, Nieman, 1998 (first edition 1992) in chapter 31, pages 798 to 800, and in many other commonly known reference works. In the present invention, TGA analysis is performed using a Mettler Toledo TGA 851 based on a sample of 500 +/- 50 mg and scanning temperatures from 25 to 350°C at a rate of 20°C/min under an air flow of 70 ml/min.

The skilled man will be able to determine the "volatile onset temperature" by analysis of the TGA curve as follows: the first derivative of the TGA curve is obtained and the inflection points thereon between 150 and 350°C are identified. Of the inflection points having a tangential slope value of greater than 45° relative to a horizontal line, the one having the lowest associated temperature above 200°C is identified. The temperature value associated with this lowest temperature inflection point of the first derivative curve is the "volatile onset temperature".

The "total volatiles" evolved on the TGA curve is determined using Star^{®} SW 11.0 software. Using this software, the curve is first normalised relative to the original sample weight in order to obtain mass losses in % values relative to the original sample. Thereafter, the temperature range of 25 to 350°C is selected and the step horizontal (in German: "Stufe horizontal") option selected in order to obtain the % mass loss over the selected temperature range.

For the purpose of the present application, the "total volatiles" associated with the filler material or surface-treated filler material and evolved over a temperature range of 25 to 280°C is characterised according to % mass loss of the filler material or surface-treated filler material sample over a temperature range as read on a thermogravimetric (TGA) curve. The "total volatiles" evolved on the TGA curve is determined using Star^{®} SW 11.0 software. Using this software, the curve is first normalised relative to the original sample weight in order to obtain mass losses in % values relative to the original sample. Thereafter, the temperature range of 25 to 280°C is selected and the step horizontal (in German: "Stufe horizontal") option selected in order to obtain the % mass loss over the selected temperature range.

Additionally or alternatively, the at least one surface-treated filler material, preferably the at least one surface treated calcium carbonate-comprising filler material, has a hydrophilicity of below 8:2 volumetric ratio of water : ethanol measured at +23°C (± 2°C) with the sedimentation method. For example, the surface-treated filler material has a hydrophilicity of below 7:3 volumetric ratio of water : ethanol measured at +23°C (± 2°C) with the sedimentation method.

In addition to the afore-mentioned advantageous surface characteristics, the chemical structure of the treatment layer of the at least one surface-treated filler material, preferably the at least one surface treated calcium carbonate-comprising filler material, allows the customising or tailoring of the surface properties of the filler material with respect to the envisaged application area. For example, the hydrophobicity or hydrophilicity of the at least one surface-treated filler material, preferably the at least one surface treated calcium carbonate-comprising filler material, can be varied by introducing more hydrophobic or hydrophilic substituents into the treatment layer, i.e. into the at least one mono-substituted succinic anhydride and/or at least one mono-substituted succinic acid and/or salty reaction products thereof, or into the phosphoric acid ester or blend of one or more phosphoric acid mono-ester and salty reaction products thereof and/or one or more phosphoric acid di-ester and salty reaction products thereof or into the at least one saturated aliphatic linear or branched carboxylic acid or into the at least one polydialkylsiloxane.

Furthermore, the at least one surface-treated filler material, preferably the at least one surface treated calcium carbonate-comprising filler material, used in the process of the present invention has also the advantage that it has an improved thermal stability if it is surface-treated with at least one mono-substituted succinic anhydride and/or at least one mono-substituted succinic acid and/or salty reaction products thereof, or into the phosphoric acid ester or blend of one or more phosphoric acid mono-ester and salty reaction products thereof and/or one or more phosphoric acid di-ester and salty reaction products thereof. For example, such at least one surface-treated filler material, preferably the at least one surface treated calcium carbonate-comprising filler material, is thermally stable at temperatures above 230°C, e.g. up to temperatures of 250°C, 270°C, or 290°C.

Methods for preparing the surface-treated filler materials are described in WO 2014/060286 A1 and WO 2014/128087 A1.

In addition to the surface-treated filler material, the at least one filler material may comprise additional inorganic powders and/or organic powders. Additionally or alternatively, the thermoplastic polymer may comprise additional inorganic powders and/or organic powders. Preferably, the at least one filler material comprises additional inorganic powders and/or organic powders, if present.

The additional inorganic powder may be selected from the group comprising natural ground calcium carbonate (GCC); precipitated calcium carbonate (PCC); calcium carbonate-containing minerals such as dolomite, mixed carbonate based fillers such as calcium associated with magnesium containing mineral, such as talc, or with clay; mica; and mixtures of same, such as talc-calcium carbonate or calcium carbonate-kaolin mixtures, or mixtures of natural ground calcium carbonate with aluminium hydroxide, mica or with synthetic or natural fibres, or co-structures of minerals such as talc-calcium carbonate or talc-titanium dioxide co-structures. The additional organic powder may be selected from the group comprising wood flour, modified starch, and mixtures thereof. The additional inorganic powders and/or organic powders can also be surface-treated, e.g. with fatty acids such as stearic acid or palmitic acid.

According to one embodiment of the present invention, the at least one filler material is added in step d) in an amount from 50 to 99 wt.-%, preferably from 60 to 98 wt.-%, more preferably from 80 to 92 wt.-%, and most preferably from 87 to 90 wt.-%, based on the total weight of the compacted material obtained in step e).

According to one embodiment, the at least one filler material provided in step a) has a temperature between 20°C and 300°C, and preferably between 60°C and 250°C.

### Characterization of step b): provision of at least one polymer binder

According to step b) of the process of the present invention, at least one polymer binder is provided.

The term "at least one" polymer binder in the meaning of the present invention means that the polymer binder comprises, preferably consists of, one or more polymer binder(s).

In one embodiment of the present invention, the at least one polymer binder comprises, preferably consists of, one polymer binder. Alternatively, the at least one polymer binder comprises, preferably consists of, two or more polymer binders. For example, the at least one polymer binder comprises, preferably consists of, two polymer binders.

Preferably, the at least one polymer binder comprises, more preferably consists of, one polymer binder.

In the process of the present invention, the polymer binder is used to separate the single particles in the compacted material obtained in step e), and is not chemically bound to the surface of the at least one filler material.

According to one embodiment of the present invention, the polymer binder is selected from the group consisting of polyolefins, ethylene copolymers, e.g. ethylene-1-hexene copolymers or ethylene-1-octene copolymers, metallocene based polypropylenes, polypropylene homo- or co-polymers, preferably amorphous polypropylene homopolymers, and combinations thereof. Preferably, the polymer binder is a polyolefin. According to a preferred embodiment of the inventive process, the polyolefin is selected from the group of homo- and/or copolymers of polyethylene, homo- and/ or copolymers of polypropylene, homo- and/or copolymers of polybutylene, or mixtures thereof. According to another preferred embodiment, the polymer binder is selected from the group consisting of polypropylene homopolymers, ethylene-1-hexene copolymers, ethylene-1-octene copolymers, metallocene based polypropylenes, and mixtures thereof.

For the purpose of present invention the expression "metallocene based" means that during the manufacturing process of the polymer a metallocene catalyst, which is a single site catalyst, has been applied.

The polymer binder may be provided in solid form or molten form. According to one embodiment, the polymer binder is a solid polymer binder, for example, in form of granules or a powder. According to another embodiment, the polymer binder is a molten polymer binder.

It is appreciated that, irrespective whether the polymer binder is provided in solid or molten form, at some point of time during the preparation of the compacted material the polymer binder will be in a liquid form having a certain viscosity. According to one embodiment, the polymer binder has a rotational viscosity from 100 to 400 000 mPa·s, preferably from 1 000 to 100 000 mPa·s, and more preferably from 5 000 to 50 000 mPa·s, at 190°C. The rotational viscosity is measured by a rotational viscosimeter such as a rheometer from Anton Paar, model Physica MCR 300 Modular Compact rheometer, with a plate-plate system having a diameter of 25 mm, a gap of 0.2 mm and a shear rate of 5 s⁻¹.

According to one embodiment, the at least one polymer binder is added in step d) in an amount from 1 to 50 wt.-%, based on the total weight of the material obtained in step e), preferably from 2 to 40 wt.-%, more preferably from 3 to 25 wt.-%, and most preferably from 5 to 20 wt.-%, based on the total weight of the compacted material obtained in step e). The process of the present invention also allows for use of extremely low concentrations of the at least one polymer binder. According to one embodiment, the at least one polymer binder is added in step d) in an amount from 1 to 10 wt.-%, preferably from 2 to 8 wt.-%, based on the total weight of the compacted material obtained in step e). This may further reduce or avoid any negative effects on a polymer composition, to which the compacted material is added, and may increase the compatibility with the same.

According to one embodiment, the at least one polymer binder provided in step b) is in solid form. According to another embodiment, the at least one polymer binder provided in step b) is in molten form, preferably having a temperature above the melting point or glass transition temperature of the at least one polymer binder. According to one embodiment, the at least one polymer binder has a temperature which is from 50°C to 300°C above the glass transition temperature of the at least one polymer binder, if an amorphous polymer binder is used. According to another embodiment, the at least one polymer binder has a temperature which is from 10°C to 200°C above the melting point of the at least one polymer binder, if the at least one polymer binder is an at least partially crystalline polymer. For example, the at least one polymer binder has a temperature between 20°C and 300°C, preferably between 30°C and 270°C, more preferably between 40°C and 250°C, and most preferably between 50°C und 230°C.

### Characterization of step c): provision of at least one thermoplastic polymer

According to step c) of the process of the present invention, at least one thermoplastic polymer is provided.

The term "at least one" thermoplastic polymer in the meaning of the present invention means that the thermoplastic polymer comprises, preferably consists of, one or more thermoplastic polymer(s).

In one embodiment of the present invention, the at least one thermoplastic polymer comprises, preferably consists of, one thermoplastic polymer. Alternatively, the at least one thermoplastic polymer comprises, preferably consists of, two or more thermoplastic polymers. For example, the at least one thermoplastic polymer comprises, preferably consists of, two thermoplastic polymers.

Preferably, the at least one thermoplastic polymer comprises, more preferably consists of, one thermoplastic polymer.

According to one embodiment, the at least one thermoplastic polymer is selected from the group consisting of homopolymers and/or copolymers of polyolefins, polyamides, polystyrenes, polyacrylates, polyvinyls, polyurethanes, halogen-containing polymers, polyesters, polycarbonates, and mixtures thereof.

Examples of thermoplastic polymers being homopolymers and/or copolymers of polyolefins include, for example, polyethylenes (LDPE, LLDPE, VLDPE, ULDPE, MDPE, HDPE, UHMWPE), polypropylene, polyisobutylene, poly-4-methylpentene-1, polybutadiene, polyisoprene, polycyclooctene, ethylene/but-1-ene copolymers, ethylene-1-hexene copolymers, ethylene-methylpentene copolymers, ethylene-1-octene copolymers, polypropylene-polyethylene (EP), EPM, EPDM, ethylene-vinylacetat (EVA), and ethylene-acrylic ester copolymers.

Examples of thermoplastic polymers being polyamides (PA) include, for example, PA-6, PA-6.6, PA-6.10, PA-4.6, PA-4.10, PA-6.12, PA-12.12, PA-11, PA-12 as well as partially aromatic polyamides (e.g. polyphthalamides).

Examples of thermoplastic polymers being polystyrenes include, for example, polystyrene, polymethylstyrene, styrene-butadiene copolymers (SB), styrene-butadiene-styrene (SBS) and its hydrogenated polymer (SEBS), Styrene-isoprene, styrene-isoprene-styrene (SIS), styrene-butadiene-acrylonitrile (ABS), styrene-acrylonitrile-acrylate (ASA), styrene-maleic anhydride, and grafted polymers, for example, styrene-grafted butadiene, maleic acid anhydride-grafted SBS, or grafted polymers from methylmethacrylate, styrene-butadiene and ABS (MABS).

Examples of thermoplastic polymers being polyurethanes (PU) include, for example, linear polyurethanes (TPU).

Examples of thermoplastic polymers being polyacrylates include, for example, polyacrylates, or polymethacrylates, for example, polymethylmethacrylate, polyacrylonitrile, polyacrylamide, polybutylacrylate.

Examples of thermoplastic polymers being halogen-containing polymers, include, for example, polyvinylchloride, polychloroprene, polyvinylidene chloride, chlorinated polyethylene, or polytetrafluoroethylene.

Examples of thermoplastic polymers being polyesters, include, for example, polylactic acid (PLA) polyethylene terephthalate (PET) or polybutylene terephthalate (PBT).

According to one embodiment, the at least one thermoplastic polymer is a polyolefin being selected from the group of homo- and/or copolymers of polyethylene, homo- and/ or copolymers of polypropylene, homo- and/or copolymers of polybutylene, or mixtures thereof. According to another embodiment, the at least one thermoplastic polymer is a polyolefin comprising a polyethylene, a polypropylene, a polybutylene, or mixtures thereof. For example, the at least one thermoplastic polymer may be selected from the group comprising low density polyethylene (LDPE), linear low density polyethylene (LLDPE), high density polyethylene (HDPE), polypropylene (PP) such as polypropylene homopolymers, random polypropylene, heterophasic polypropylene or block copolymers including polypropylene units.

The at least one thermoplastic polymer optionally may comprise one or more additives which are well known to the skilled person. Such additives comprise, without being limited to, UV-absorbers, light stabilizers, processing stabilizers, antioxidants, heat stabilizers, nucleating agents, metal deactivators, impact modifiers, plasticizers, lubricants, rheology modifiers, processing aids, pigments, dyes, optical brighteners, antimicrobials, antistatic agents, slip agents, anti-block agents, coupling agents, dispersants, compatibilizers, oxygen scavengers, acid scavengers, markers, antifogging agents, surface modifiers, flame retardants, blowing agents, smoke suppressors, crosslinkers, reinforcement agents, such as glass fibres, carbon fibres, natural fibres and/or glass bubbles, or mixtures of the foregoing additives.

### Characterization of step d): feeding step

According to step d) of the process of the present invention, the at least one filler material of step a) and the at least one polymer binder of step b) are fed simultaneously or subsequently into a high speed mixer unit.

In one embodiment further additives which are well known to the skilled person are added during step d). Such additives comprise, without being limited to, UV-absorbers, light stabilizers, processing stabilizers, antioxidants, heat stabilizers, nucleating agents, metal deactivators, impact modifiers, plasticizers, lubricants, rheology modifiers, processing aids, pigments, dyes, optical brighteners, antimicrobials, antistatic agents, slip agents, anti-block agents, coupling agents, dispersants, compatibilizers, oxygen scavengers, acid scavengers, markers, antifogging agents, surface modifiers, flame retardants, blowing agents, smoke suppressors, crosslinkers, reinforcement agents, such as glass fibres, carbon fibres, natural fibres and/or glass bubbles, or mixtures of the foregoing additives.

According to the present invention, the at least one filler material of step a) and the at least one polymer binder of step b) are fed into a high speed mixer unit. Suitable conveyor systems for feeding the components into the high speed mixer unit are known to the skilled person. For example, the feeding may be carried out by use of a pneumatic conveyor system, a vibrating conveyor system, a flexible conveyor system, a vertical conveyor system, a spiral conveyor system, or combinations of one or more of the foregoing systems.

Suitable high speed mixer units are also known to the skilled person. Examples of suitable high speed mixer units are single-screw high speed mixer, such as ring layer mixers available from the companies Lödige, Amixon, AVA-Huep or Zeppelin, or high speed batch mixers as available from the companies Henschel, Papenmeier, Mixaco, or Zeppelin, or intensive mixer such as available by the companies Laeis or Eirich.

According to one embodiment, process step c) comprises simultaneously or subsequently feeding the at least one filler material of step a) and the at least one polymer binder of step b) into a high speed mixer unit of a cylindrical treatment chamber. According to a preferred embodiment, the cylindrical treatment chamber contains one single-screw high speed mixer, in a horizontal or vertical position, or the cylindrical treatment chamber contains a mixing shaft positioned in a certain angle to the vertical direction. For example, the mixing shaft is positioned in the cylinder axis. However, the position of the mixing shaft may deviate from the cylinder axis as long as a sufficient mixing is obtained. For example, the mixing shaft may deviate from the cylinder axis in an angle of from 1 to 20°.

Especially useful in the present invention are conventional commercially available cylindrical treatment chambers containing a single-screw high speed mixer, having e.g. the following parameters: length 350 mm, diameter 90 mm, at 1 000 - 4 000 rpm; length 1 200 mm, diameter 230 mm, at 400 - 3 000 rpm; length 150 mm, diameter 150 mm, at 600 - 1 300 rpm. Preferably, the ratio length : diameter is from 1:1 to 6:1, more preferably from 2:1 to 5:1, especially 3:1 to 4:1.

### Characterization of step e): mixing step

According to step e) of the process of the present invention, the at least one filler material of step a) and the at least one polymer binder of step b) are mixed in the high speed mixer unit to obtain a compacted material.

The mixing may be carried out at a temperature from 100°C to 200°C, preferably from 120°C to 180°C, and more preferably at a temperature from 130°C to 160°C. The preferred circumferential mixing speed may be from 5 to 100 m/s, preferably from 7 to 80 m/s, more preferably from 10 to 50 m/s.

According to one embodiment, the at least one polymer binder provided in step b) is a molten polymer binder, and in step e) the at least one filler material of step a) and the molten polymer binder of step b) are mixed in the high speed mixer unit until formation of a compacted material.

According to another embodiment, the at least polymer binder provided in step b) is a solid polymer binder, and in step e) the at least one filler material of step a) and the solid polymer binder of step b) are mixed in the high speed mixer unit until formation of a compacted material, wherein the mixing step is carried out at a temperature above the melting point or glass transition temperature of the polymer binder.

According to one embodiment the mixing step e) is performed at a temperature which is from 50°C to 300°C above the glass transition temperature of the at least one polymer binder, if an amorphous polymer binder is used. According to another embodiment the mixing step e) is performed at a temperature which is from 10°C to 200°C above the melting point of the at least one polymer binder, if the at least one polymer binder is an at least partially crystalline polymer. For example, the mixing step e) may be carried out at a temperature from 100°C to 200°C, preferably from 120°C to 180°C, and most preferably from 130°C to 160°C.

According to the present invention, mixing step e) is carried out until formation of a compacted material is obtained. By compacted material, a bulk material is understood to consist of a conglomerate of a number of single particles forming a material with a weight median particle size *d*₅₀ ranging from 10 µm to 10 mm, measured by sieve analysis using the Retsch AS 200 sieve tower according to ISO 3310 standard.

A process for the manufacturing of a compacted material is also known from EP 2 267 086 A1.

### Characterization of step f): temperature reduction step

According to step f) of the process of the present invention, the temperature of the compacted material obtained in step d) is reduced below the melting point or glass transition temperature of the at least one polymer binder.

In process step f) the temperature of the compacted material obtained in step e) is reduced below the melting point or glass transition temperature of the at least one polymer binder. According to one embodiment, in process step f) the temperature of the compacted material obtained in step e) is reduced below the melting point of the at least one polymer binder. According to another embodiment, in process step f) the temperature of the compacted material obtained in step e) is reduced below the glass transition temperature of the at least one polymer binder.

The temperature of the compacted material obtained in step e) can be reduced by any method and means known to the skilled person. According to one embodiment, process step f) is carried out by transferring the compacted material obtained in step e) to a cooling unit. Examples for suitable cooling units are fluidized beds, or means which allow to cool down the compacted material via chilled surfaces.

According to an optional embodiment, a surface treatment agent is fed simultaneously with or after the feeding of the at least one filler material into the high speed mixer unit. The surface treatment agent may be liquid or liquefied, and may be preferably provided in the molten state.

With regard to the definition of the surface treatment agent and preferred embodiments thereof, reference is made to the statements provided above when discussing the technical details of the at least one surface-treated filler material.

The main difference between the surface treatment agent and the at least one polymer binder is that the surface treatment agent is chemically bound to the at least one filler material. Preferably, the surface treatment agent serves, inter alia, to alter the surface tension of the at least one filler material, and thus, the hydrophobicity thereof. On the other hand, as mentioned below, also waxes can be used as surface treatment agent, which are not chemically bound, but particularly serve to improve dispersion and especially reduce the viscosity of high viscosity polymer binders.

It may furthermore be advantageous that before step f), i.e. before the temperature of the compacted material obtained in step e) is reduced below the melting temperature or glass transition temperature of the at least one polymer binder, the compacted material of step e) is transferred to a second mixing unit. In this second mixing unit optionally further molten polymer binder can be added to and mixed with the compacted material of step e).

It has to be noted that conventional functional components like impact modifiers, stabilizers, etc. may be included during the mixing process, or to the finished compacted material, as well in the final product, i.e. the compounded thermoplastic resin.

### Characterization of step g): combining step

According to step g) of the process of the present invention, the compacted material obtained in step f) and the at least one thermoplastic polymer of step c) are combined to obtain a filled thermoplastic polymer.

The compacted material obtained in step f) and the at least one thermoplastic polymer of step c) can be combined by using conventional techniques commonly known to the skilled person. For example, process step g) may be carried out in an extruder.

In one embodiment of the present invention, the compacted material obtained in step f) and the at least one thermoplastic polymer of step c) are filled into an extruder via two or more separate feeders. Preferably, the compacted material obtained in step f) is provided as a fine grain material and the at least one thermoplastic polymer of step c) is provided in pellet form. In this embodiment, process steps g) and h) are preferably carried out simultaneously.

Alternatively, the compacted material obtained in step f) and the at least one thermoplastic polymer of step c) are supplied into an extruder, mixed and pelletized. In this embodiment, process steps g) and h) are preferably carried out separately.

In another embodiment, the compacted material obtained in step f) and the at least one thermoplastic polymer of step c) are pre-mixed in a mixer such as a rotating drum mixer, and then filled into an extruder. In this embodiment, process steps g) and h) are preferably carried out separately.

According to one embodiment, process step g) comprises providing the at least one thermoplastic polymer of step c) to which the compacted material obtained in step f) is added or providing the compacted material obtained in step f) to which the at least one thermoplastic polymer of step c) is added. Thus, the compacted material obtained in step f) and the at least one thermoplastic polymer of step c) can be added subsequently, for example, into an extruder. Alternatively, the at least one thermoplastic polymer of step c) and the compacted material obtained in step f) are added simultaneously, for example, into an extruder.

According to one embodiment, the compacted material obtained in step f) is added in step g) in an amount from 1 to 80 wt.-%, preferably from 3 to 40 wt.-% and, more preferably from 5 to 30 wt.-% and most preferably from 10 to 20 wt.-% based on the total weight of the filled thermoplastic polymer.

According to the present invention, combining step g) is carried out until a filled thermoplastic polymer is obtained. Thus, the filled thermoplastic polymer obtained in step g) preferably comprises the compacted material obtained in step f) such that the compacted material is evenly distributed in the at least one thermoplastic polymer of step c). Alternatively, the filled thermoplastic polymer obtained in step g) preferably comprises the compacted material obtained in step f) such that the compacted material is unevenly distributed in the at least one thermoplastic polymer of step c).

### Characterization of step h): extrusion coating step

According to step h) of the process of the present invention, the filled thermoplastic polymer obtained in step g) is extrusion coated on at least a portion of the surface of a substrate.

In one preferred embodiment, the filled thermoplastic polymer obtained in step g) is extrusion coated in a conventional extruder which has been fitted with the desired die and which extruder has been heated to the desired temperature. The extruder is operated at a speed, temperatures and coating width such that an extrusion-coated material is formed which are commercially acceptable.

For example, extrusion coating step h) can be carried out at a die temperature from 200°C to 400°C, preferably from 250°C to 350°C, and more preferably at a die temperature from 280°C to 320°C. The preferred machine speed is from 20 to 800 m/min, preferably from 50 to 400 m/min, more preferably from 70 to 200 m/min. The preferred coating width is from 50 to 400 cm, preferably from 50 to 300 cm, more preferably from 50 to 150 cm.

According to one embodiment, the substrate of step h) is selected from a paper, a paperboard, foil, preferably an aluminium-foil or a metallized foil, a nonwoven fabric, a polymeric film, preferably a BOPP-film, a PET-film, PBT-film or a nylon-film, and combinations thereof.

If the substrate comprises a combination of the above-mentioned substrates, the substrate of step h) is preferably a multilayered substrate.

A "film" in the meaning of the present invention is a sheet or layer of material having a median thickness which is small compared to its length and width. For example, the term "film" may refer to a sheet or layer of material having a median thickness of less than 200 µm, but more than 1 µm.

The process of the present invention may be carried out in form of a continuous process or a batch process.

The inventors of the present invention found that the present process for producing an extrusion-coated material increases the hot tack strength, preferably over a broad seal bar temperature range. In addition thereto, the present process provides more security in the packaging process and enables to increase the cycle frequency during processing. Furthermore, the present process saves energy by lowering the seal bar temperature.

In view of the good result obtained, the present application refers in another aspect to an extrusion-coated material produced by the process.

With regard to the definition of the extrusion-coated material and preferred embodiments thereof, reference is made to the statements provided above when discussing the technical details of the process for producing an extrusion-coated material of the present invention.

A further aspect of the present invention refers to an article comprising the extrusion-coated material, as defined herein. The article is selected from the group consisting of composite cans, cups, bricks and pouches, ream wrappings, multi-wall bags, liners for cartons, corrugated shipping containers, fibre drums, vacuum-forming materials for blister packaging, book or booklet covers, meat wraps, cheese wraps, packaging of confectionery and cigarettes, display materials, stickers, seals, graphic applications, protection of drugs, protection of cosmetics and envelopes.

According to still another aspect of the present invention, use of the extrusion-coated material, as defined herein, in a lamination process is provided.

The lamination can be carried out by process well known to the skilled person. For example, a lamination process for forming a one-layer structure or multi-layer structure can be used. Preferably, the lamination can be carried out by a press type or nip-roll type lamination, over-lamination, roll to roll press lamination, cut sheet lamination, multi roll lamination.

The scope and interest of the invention will be better understood based on the following examples which are intended to illustrate certain embodiments of the present invention and are non-limitative.

### Examples

### 1 Measurement methods

In the following the measurement methods implemented in the examples are described.

### Ash content

The ash content in wt.-% of a compacted material sample or a filled polymer, based on the total weight of the sample, was determined by incineration of a sample in an incineration crucible which was put into an incineration furnace at 570°C for 2 hours. The ash content was measured as the total amount of remaining inorganic residues.

### Hot tack measurements

The hot tack measurements have been carried out according to ASTM F1921 method B on a Hot Tack Tester model 4000 (J&B, Belgium) using the Hot-Tack Software "Hot Tack 32-4000 v0.9", using the following conditions: pressure 1 000 N/mm², seal time = 0.5 s, cool time = 0.2 s, peel speed = 100 m/s, width = 25 mm, size of films 25 mm x 300 mm.

### 2 Compacted material

### 2.1 Starting materials

The following starting materials have been used for the preparation of the compacted material:
Filler: Calcium carbonate (ash content = 87.5 wt.-%, *d*₉₈ = 15µm, *d*₅₀ = 2.6 µm, 0.5 surfaced coated with fatty acid, commercially available from Omya International AG, Switzerland)
Binder: Blend of 70 wt.-% ethylene-1-octene-copolymer (Affinity GA 1900), density (ASTM D792) = 0.87 g/cm³ according to technical data sheet, rotational viscosity = 8 500 mPa·s at 190°C, commercially available from The Dow Chemical Company, USA and 30 wt.-% metallocene based polypropylene wax (Licocene PP-1302), density (23°C; ISO 1183) = 0.87 g/cm³, according to technical data sheet, rotational viscosity = 130 mPa·s at 190°C, commercially available from Clariant International Ltd., Switzerland.

### 2.2 Preparation of the compacted material

The compacted material has been manufactured by using a horizontal "Ring-Layer-Mixer/Pelletizer", namely "Amixon RMG 30" with a process length of 1 200 mm, and a diameter of 230 mm, equipped with 3 feeding ports in sequence, and 1 out-let port. The cylinder is fitted with a heating/cooling double wall. Compacting is obtained by a rotating, cylindrical, pin-fitted screw. The filler has been preheated to 110°C, and fed gravimetrically into the first feed port at the rate of 22.6 kg/h. The binder has been injected in liquid state at a temperature of 230°C through feeding port 2 at the required rate (kg/h) related to component A at 2.4 kg/h (weight ratio filler : binder = 88 : 12). Compacting is carried out in the "Ring-Layer-Mixer/Pelletizer" at 180°C and a screw speed of 800 rpm. The product leaves the Mixer/Pelletizer through the outlet port, is transferred by gravity into a second Ring-Layer-Mixer/Pelletizer for further compacting and cooling, operated at a temperature of 140°C and a screw speed of 400 rpm. Both units were of identical size and dimensions. The resulting compacted material leaves the unit through the outlet port, and is free of dust and free flowing.

**Table 1: Compositions and properties of prepared compacted material CM1 (wt.-% is based on total weight of the compacted material).**

| | CM1 |
|---|---|
| Filler [wt.-%] | 88.0 |
| Binder [wt.-%] | 12.0 |
| Ash content [wt.-%] | 87.5 |

### 3 Extrusion Coating

### 3.1 Starting Materials

### 3.1.1 Polymer

Polyethylene, DOW™ LD-PE PG 7004 (commercially available from The Dow Chemical Company, Horgen)

### 3.1.2 Fillers

A) Masterbatch comprising calcium carbonate and polyethylene in a weight ratio of 75:25 (ash content = 75 wt.-%, *d*₉₈ = 15 µm, *d*₅₀ = 2.6 µm, commercially available from Omya International AG, Switzerland);
B) Compacted Material (CM1) as described under point 2.

### 3.1.3 Base paper

Uncoated wood-free, Ziegler Z-Offset 80 g/m² (Ziegler Papier AG, Switzerland)

### 3.2 Preparation of filled polymer for extrusion coating

Formulations were preblended in a rotating drum mixer and subsequently filled in the extruder hopper of the extrusion coating line.

**Table 2: Compositions and properties of prepared filled polymers (FP1 to FP5, wt.-% is based on total weight of the filled polymer).**

| | FP1 | FP2 | FP3 | FP4 | FP5 |
|---|---|---|---|---|---|
| Filler A [wt.-%] (comparative) | - | - | 10 | 20 | 20 |
| Filler B [wt.-%] (invention) | 10 | 16 | - | - | - |
| Polymer [wt.-%] | 90 | 84 | 90 | 80 | 80 |
| Ash content [wt.-%] | 9 | 14 | 8 | 15 | 15 |

### 3.3 Extrusion Coating

The extrusion coating has been carried out on an EK Pack A2 Extrusion coater (Coater: BLM/Moncalvao, Extrusion Coater) with a machine speed of 80 m/min and a coating width of 60 cm. The extruder was set to an increasing temperature profile as follows: 250 °C, 260°C, 270°C, 280°C, 290°C and 300°C. The screw speed was 100 rpm. The temperature for the extrusion die has been set to 300°C to 306°C, the resulting mass temperature was 290°C to 310°C.

**Table 3: Compositions and properties of prepared extrusion coated papers (ECP1 to ECP 8, wt.-% is based on total weight of the filled polymer in the polymer used for extrusion-coating).**

| | Filler level [wt.-%] | Coating weight [g/m²] |
|---|---|---|
| ECP1 (invention) | 10 FP1 | 15 |
| ECP2 (invention) | 16 FP2 | 15 |
| ECP3 (comparative) | 10 FP3 | 15 |
| ECP4 (comparative) | 20 FP4 | 15 |
| ECP5 (comparative) | 20 FP5 | 32 |
| ECP6 (comparative) | -^{a} | 15 |
| ECP7 (comparative) | -^{a} | 30 |

| | | |
|---|---|---|
| *a) unfilled polymer.* | | |

### 3.4 Sealability

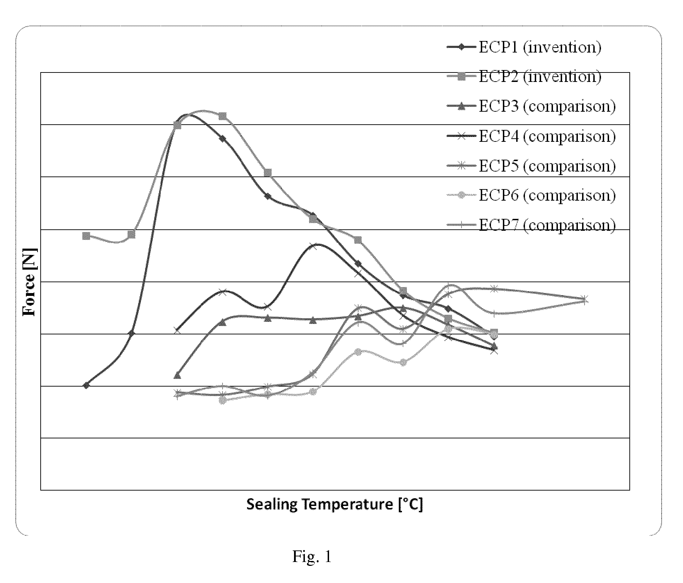

Figure 1 shows the hot tack measurements at different sealing temperatures. As can be gathered from Figure 1 the extrusion coated papers comprising a compacted material as polymer filler show superior sealability properties. Remarkable and completely surprising is not only the improvement in view of extrusion coated papers comprising an unfilled polymer but also the improvement in view of extrusion coated paper filled with a masterbatch filler.

## Claims

1. A process for producing an extrusion-coated material comprising the following steps:
a) providing at least one filler material in powder form,
b) providing at least one polymer binder,
c) providing at least one thermoplastic polymer,
d) simultaneously or subsequently feeding the at least one filler material of step a) and the at least one polymer binder of step b) into a high speed mixer unit,
e) mixing the at least one filler material of step a) and the at least one polymer binder of step b) in the high speed mixer unit to obtain a compacted material,
f) reducing the temperature of the compacted material obtained in step d) below the melting point or glass transition temperature of the at least one polymer binder,
g) combining the compacted material obtained in step f) and the at least one thermoplastic polymer of step c) to obtain a filled thermoplastic polymer,
h) extrusion coating the filled thermoplastic polymer obtained in step g) on at least a portion of the surface of a substrate.

2. The process of claim 1, wherein the at least one filler material of step a) comprises a calcium carbonate-comprising filler material.

3. The process of claim 1 or 2, wherein the at least one filler material of step a) is a calcium carbonate-comprising filler material being selected from the group consisting of natural ground calcium carbonate, precipitated calcium carbonate, surface-modified calcium carbonate, and mixtures thereof, and preferably natural ground calcium carbonate.

4. The process of any one of claims 1 to 3, wherein the at least one filler material of step a) has a weight median particle size *d*₅₀ from 0.05 to 10 µm, preferably from 0.1 to 7 µm, more preferably from 0.25 to 5 µm, and most preferably from 0.5 to 4 µm.

5. The process of any one of claims 1 to 4, wherein the at least one filler material of step a) is at least one surface treated filler material comprising a treatment layer on at least a part of the surface of the filler material, wherein the treatment layer comprises
i) at least one mono-substituted succinic anhydride and/or at least one mono-substituted succinic acid and/or salty reaction products thereof, and/or
ii) a phosphoric acid ester or blend of one or more phosphoric acid mono-ester and salty reaction products thereof and/or one or more phosphoric acid di-ester and salty reaction products thereof, and/or
iii) at least one saturated aliphatic linear or branched carboxylic acid, and/or
iv) at least one polydialkylsiloxane,
and/or mixtures of the materials according to i) to iv).

6. The process of claim 5, wherein the at least one mono-substituted succinic anhydride consists of succinic anhydride mono-substituted with a group selected from a linear, branched, aliphatic and cyclic group having a total amount of carbon atoms from C2 to C30, preferably from C3 to C25, and most preferably from C4 to C20 in the substituent, and/or
the one or more phosphoric acid mono-ester consisting of an o-phosphoric acid molecule mono-esterified with one alcohol molecule selected from unsaturated or saturated, branched or linear, aliphatic or aromatic alcohols having a total amount of carbon atoms from C6 to C30, preferably from C8 to C22, more preferably from C8 to C20, and most preferably from C8 to C18 in the alcohol substituent, and/or
the one or more phosphoric acid di-ester consisting of an o-phosphoric acid molecule di-esterified with two alcohol molecules selected from the same or different, unsaturated or saturated, branched or linear, aliphatic or aromatic fatty alcohols having a total amount of carbon atoms from C6 to C30, preferably from C8 to C22, more preferably from C8 to C20, and most preferably from C8 to C18 in the alcohol substituent, and/or
the saturated aliphatic linear or branched carboxylic acid is octanoic acid or stearic acid.

7. The process of claim 5 or 6, wherein the at least one surface-treated filler material comprises the treatment layer in an amount of at least 0.1 wt.-%, preferably in an amount from 0.1 to 3 wt.-%, based on the total dry weight of the at least one filler material.

8. The process of any one of the previous claims, wherein the at least one filler material is added in step d) in an amount from 50 to 99 wt.-%, preferably from 60 to 98 wt.-%, more preferably from 80 to 92 wt.-%, and most preferably from 87 to 90 wt.-%, based on the total weight of the compacted material.

9. The process of any one of the previous claims, wherein the at least one polymer binder of step b) has a rotational viscosity from 100 to 400 000 mPa·s, preferably from 1 000 to 100 000 mPa·s, and more preferably from 5 000 to 50 000 mPa·s, at 190°C, by using a rotational viscosimeter.

10. The process of any one of the previous claims, wherein the at least one polymer binder of step b) is selected from the group consisting of polyolefins, ethylene copolymers, e.g. ethylene-1-hexene copolymers or ethylene-1-octene copolymers, metallocene based polypropylenes, polypropylene homo- or co-polymers, preferably amorphous polypropylene homopolymers, and/or mixtures thereof.

11. The process of any one of the previous claims, wherein the at least one thermoplastic polymer of step c) is selected from homopolymers and/or copolymers of polyolefins, polyamides, polystyrenes, polyacrylates, polyvinyls, polyurethanes, halogen-containing polymers, polyesters, polycarbonates and/or mixtures thereof.

12. The process of any one of the previous claims, wherein the substrate of step h) is selected from a paper, a paperboard, foil, preferably an aluminium-foil or a metallized foil, a nonwoven fabric, a polymeric film, preferably a BOPP-film, a PET-film, PBT-film or a nylon-film, and combinations thereof.

13. The process of any one of the previous claims, wherein the compacted material is added in step g) in an amount from 1 to 80 wt.-%, preferably from 3 to 40 wt.-% and, more preferably from 5 to 30 wt.-% and most preferably from 10 to 20 wt.-% based on the total weight of the filled thermoplastic polymer.

14. Extrusion-coated material produced by a process according to any one of claims 1 to 13.

15. An article comprising an extrusion-coated material according to claim 14, wherein the article is selected from the group consisting of composite cans, cups, bricks and pouches, ream wrappings, multi-wall bags, liners for cartons, corrugated shipping containers, fibre drums, vacuum-forming materials for blister packaging, book or booklet covers, meat wraps, cheese wraps, packaging of confectionery and cigarettes, display materials, stickers, seals, graphic applications, protection of drugs, protection of cosmetics and envelopes.

16. Use of an extrusion-coated material according to claim 14 in a lamination process.
